# EUROPEAN PATENT SPECIFICATION

(11) **EP 4 250 849 B1**
(45) Date of publication and mention of the grant of the patent: **20.08.2025**
(21) Application number: 20961840.4
(22) Date of filing: 17.11.2020
(51) Int. Cl.: H04B 7/06, H04B 17/309, H04W 72/542, H04W 72/1268

(54) **METHOD AND APPARATUS FOR DETERMINING UPLINK TRANSMISSION RESOURCE, AND COMMUNICATION DEVICE AND MEDIUM**
VERFAHREN UND VORRICHTUNG ZUR BESTIMMUNG EINER UPLINK-ÜBERTRAGUNGSRESSOURCE SOWIE KOMMUNIKATIONSVORRICHTUNG UND MEDIUM
PROCÉDÉ ET APPAREIL POUR DÉTERMINER UNE RESSOURCE DE TRANSMISSION DE LIAISON MONTANTE, AINSI QUE DISPOSITIF DE COMMUNICATION ET SUPPORT

(43) Date of publication of application: 27.09.2023
(73) Proprietor: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2020/129477
(87) International publication number: WO 2022/104549

(56) References cited:
- EP-A1- 3 920 634
- WO-A1-2020/065619
- WO-A1-2020/065619
- WO-A1-2020/167102
- CN-A- 110 198 565
- CN-A- 110 896 560
- CN-A- 111 479 323
- XIAOMI: "PUSCH coverage enhancement", 3GPP TSG RAN WG1 #103-E; R1-2007640, 3RD GENERATION PARTNERSHIP PROJECT (3GPP), SOPHIA-ANTIPOLIS CEDEX ; FRANCE, 17 October 2020 (2020-10-17), e-Meeting; 20201026 - 20201113, XP051939822

## Description

### FIELD

The present disclosure relates to the technical field of wireless communication, and particularly to a method for determining an uplink transmission resource, an apparatus for determining an uplink transmission resource, a communication device, and a medium.

### BACKGROUND

In a wireless communication system, a user equipment (UE) needs to determine whether an uplink transmission resource configured by a network device is available after the network device configures a dedicated uplink transmission resource for the UE. The UE may perform an uplink transmission only when it is determined that the uplink transmission resource is available. Specifically, when determining whether the uplink transmission resource is available, the UE needs to send an uplink signal to the network device, the network device sends a downlink signal according to the uplink signal sent by the UE, such as a timing advance command (TAC), and the UE determines whether the uplink transmission resource configured by the network device is available according to the downlink signal.

However, in case that the UE does not have an uplink transmission requirement, for example, the UE does not have uplink data to send, the above-mentioned method for determining the availability of the uplink transmission resource still requires the UE to send the uplink signal and receive the downlink signal sent by the network device, which leads to additional network overheads.

WO2020/065619 A1 discloses support for transmission in preconfigured UL resources.

WO2020/167102 A1 discloses a method for transmitting uplink data through a preconfigured uplink resource in a wireless communication system and an apparatus therefor.

### SUMMARY

An embodiment of a first aspect of the present disclosure provides a method for determining an uplink transmission resource. The method is performed by a user equipment (UE) and includes determining a dedicated uplink transmission resource of the user equipment based on an availability determination condition, in which the availability determination condition includes a variation amount of a measured value of a downlink transmission corresponding to the uplink transmission resource with respect to a reference value being less than or equal to a set threshold, and/or a transmission type of an uplink transmission matching a set type.

Optionally, the method further includes releasing or suspending the uplink transmission resource in case that the uplink transmission resource is unavailable.

Optionally, the uplink transmission resource includes uplink timing, and the availability determination condition further includes a timer corresponding to the uplink timing being in a running state.

Optionally, the uplink transmission resource is configured for an uplink transmission in an idle state or an inactive state.

Optionally, the reference value is obtained by measuring the downlink transmission by the user equipment before or when a network device configures the uplink transmission resource or releases a connection with the user equipment, and the measured value is obtained by measuring the downlink transmission by the user equipment after the network device configures the uplink transmission resource or releases the connection with the user equipment.

Optionally, a set measuring object for measurement includes at least one of a set cell, a set beam, or a set measurement signal.

Optionally, a set measurement item for measurement includes one or a combination of ones of a reference signal received power (RSRP), a reference signal received quality (RSRQ), a signal to interference and noise ratio (SINR), and a pathloss.

Optionally, the measured value and/or the reference value are obtained by measuring a set measurement signal, in which the set measurement signal is a measurement signal determined according to configuration information of the network device and configured for cell selection or reselection, or dedicated to obtaining the measured value and/or the reference value.

Optionally, the configuration information includes one or a combination of ones of frequency indication information, a sub carrier spacing, a measurement time interval, reference signal configuration, a beam measurement threshold, a maximum number of beams, a beam identifier, and a signal identifier.

Optionally, the set measurement signal is configured in the uplink transmission resource, and the method further includes adopting the set measurement signal configured in the uplink transmission resource to perform cell selection or reselection in case that it is determined that the uplink transmission resource is available, and/or stopping adopting the set measurement signal configured in the uplink transmission resource to perform measurement in case that it is determined that the uplink transmission resource is unavailable.

Optionally, a measurement result of the set cell includes an average measurement result of beams whose measured values are greater than a beam measurement threshold in the set cell, and/or a maximum measurement result in beams of the set cell.

Optionally, the set beam includes any one or more of: a beam with a largest measured value in the set cell, a beam corresponding to the uplink transmission resource, a beam indicated by the network device, a beam with a measured value greater than or equal to a beam measurement threshold, and a beam with a measured value less than or equal to a beam measurement threshold.

Optionally, an identifier representing the transmission type includes one or a combination of ones of: a bearer identifier, a bearer type identifier, a data flow identifier, a session identifier, a logic channel identifier, and a cell group identifier corresponding to a service, and an uplink transmission resource type.

Optionally, the uplink transmission resource type includes one or a combination of ones of an uplink transmission on a physical uplink shared channel (PUSCH), an uplink transmission on a physical uplink control channel (PUCCH), and an uplink sounding signal.

Optionally, uplink grant is taken as the uplink transmission resource for the uplink transmission on the PUSCH.

Optionally, the uplink transmission resource has corresponding frequency indication information, in which the frequency indication information is configured by the network device or pre-configured by the user equipment, and the frequency indication information includes one or a combination of ones of a cell identifier, a frequency point identifier, a bandwidth, a bandwidth part identifier, a cell group identifier, and a timing advance group identifier.

An embodiment of a second aspect of the present disclosure provides another method for determining an uplink transmission resource. The method is performed by a network device and includes sending a configured uplink transmission resource to a user equipment, in which the uplink transmission resource is configured for the user equipment to determine a dedicated uplink transmission resource of the user equipment based on an availability determination condition, and the availability determination condition includes a variation amount of a measured value of a downlink transmission corresponding to the uplink transmission resource with respect to a reference value being less than a set threshold, and/or a transmission type of an uplink transmission matching a set type.

An embodiment of a third aspect of the present disclosure provides an apparatus for determining an uplink transmission resource. The apparatus is performed by a user equipment (UE) and includes a determining module configured to determine a dedicated uplink transmission resource of the user equipment based on an availability determination condition, in which the availability determination condition includes a variation amount of a measured value of a downlink transmission corresponding to the uplink transmission resource with respect to a reference value being less than or equal to a set threshold, and/or a transmission type of an uplink transmission matching a set type.

Optionally, the apparatus may further include a releasing module configured to release or suspend the uplink transmission resource in case that the uplink transmission resource is unavailable.

Optionally, the uplink transmission resource includes uplink timing, and the availability determination condition further includes a timer corresponding to the uplink timing being in a running state.

Optionally, the uplink transmission resource is configured for an uplink transmission in an idle state or an inactive state.

Optionally, the reference value is obtained by measuring the downlink transmission by the user equipment before or when a network device configures the uplink transmission resource or releases a connection with the user equipment, and the measured value is obtained by measuring the downlink transmission by the user equipment after the network device configures the uplink transmission resource or releases the connection with the user equipment.

Optionally, a set measuring object for measurement includes at least one of a set cell, a set beam, or a set measurement signal.

Optionally, a set measurement item for measurement includes one or a combination of ones of a reference signal received power (RSRP), a reference signal received quality (RSRQ), a signal to interference and noise ratio (SINR), and a pathloss.

Optionally, the measured value and/or the reference value are obtained by measuring a set measurement signal, in which the set measurement signal is a measurement signal determined according to configuration information of the network device and configured for cell selection or reselection, or dedicated to obtaining the measured value and/or the reference value.

Optionally, the configuration information includes one or a combination of ones of frequency indication information, a sub carrier spacing, a measurement time interval, reference signal configuration, a beam measurement threshold, a maximum number of beams, a beam identifier, and a signal identifier.

Optionally, the set measurement signal is configured in the uplink transmission resource, and the apparatus further includes a processing module configured to adopt the set measurement signal configured in the uplink transmission resource to perform cell selection or reselection in case that it is determined that the uplink transmission resource is available, and/or stop adopting the set measurement signal configured in the uplink transmission resource to perform measurement in case that it is determined that the uplink transmission resource is unavailable.

Optionally, a measurement result of the set cell includes an average measurement result of beams whose measured values are greater than a beam measurement threshold in the set cell, and/or a maximum measurement result in beams of the set cell.

Optionally, the set beam includes any one or more of a beam with a largest measured value in the set cell, a beam corresponding to the uplink transmission resource, a beam indicated by the network device, a beam with a measured value greater than or equal to a beam measurement threshold, and a beam with a measured value less than or equal to a beam measurement threshold.

Optionally, an identifier representing the transmission type includes one or a combination of ones of a bearer identifier, a bearer type identifier, a data flow identifier, a session identifier, a logic channel identifier, and a cell group identifier corresponding to a service, and an uplink transmission resource type.

Optionally, the uplink transmission resource type includes one or a combination of ones of an uplink transmission on a physical uplink shared channel (PUSCH), an uplink transmission on a physical uplink control channel (PUCCH), and an uplink sounding signal.

Optionally, uplink grant is taken as the uplink transmission resource for the uplink transmission on the PUSCH.

Optionally, the uplink transmission resource has corresponding frequency indication information, in which the frequency indication information is configured by the network device or pre-configured by the user equipment, and the frequency indication information includes one or a combination of ones of a cell identifier, a frequency point identifier, a bandwidth, a bandwidth part identifier, a cell group identifier, and a timing advance group identifier.

An embodiment of a fourth aspect of the present disclosure provides another apparatus for determining an uplink transmission resource. The apparatus is performed by a network device and includes a sending module configured to send a configured uplink transmission resource to a user equipment, in which the uplink transmission resource is configured for the user equipment to determine a dedicated uplink transmission resource of the user equipment based on an availability determination condition, and the availability determination condition includes a variation amount of a measured value of a downlink transmission corresponding to the uplink transmission resource with respect to a reference value being less than or equal to a set threshold, and/or a transmission type of an uplink transmission matching a set type.

An embodiment of a fifth aspect of the present disclosure provides a communication device. The communication device includes a transceiver, a memory, a processor connected to the transceiver and the memory, respectively, and configured to control wireless signal transmission and reception of the transceiver by executing computer-executable instructions on the memory, and capable of implementing the method for determining the uplink transmission resource provided in the embodiment of the first aspect of the present disclosure, or the method for determining the uplink transmission resource provided in the embodiment of the second aspect of the present disclosure.

An embodiment of a sixth aspect of the present disclosure provides a computer storage medium having stored therein computer-executable instructions that, when executed by a processor, cause the method for determining the uplink transmission resource provided in the embodiment of the first aspect of the present disclosure, or the method for determining the uplink transmission resource provided in the embodiment of the second aspect of the present disclosure to be implemented.

The method for determining the uplink transmission resource, the apparatus for determining the uplink transmission resource, the communication device, and the medium are provided in the embodiments of the present disclosure. The dedicated uplink transmission resource of the UE is determined by the UE based on the availability determination condition, in which the availability determination condition includes the variation amount of the measured value of the downlink transmission corresponding to the uplink transmission resource with respect to the reference value being less than or equal to the set threshold, and/or the transmission type of the uplink transmission matching the set type. Therefore, the UE may determine the availability of the uplink transmission resource merely by means of measuring the downlink transmission corresponding to the uplink transmission resource and/or by means of determining whether a transmission type of an uplink transmission to be sent matches a set type corresponding to the uplink transmission resource. In case that the uplink transmission resource is available, the uplink transmission resource is taken as the dedicated uplink transmission resource of the UE. Therefore, the UE does not need to send an uplink signal to the network device and receive a downlink signal sent by the network device to determine the availability of the uplink transmission resource, such that network overheads may be reduced.

Additional aspects and advantages of the present disclosure will be given in part in the following description, become apparent in part from the following description, or be learned by practice of the present disclosure.

### BRIEF DESCRIPTION OF THE DRAWINGS

The above-mentioned and/or additional aspects and advantages of the present disclosure will be apparent and readily understood from the following description of embodiments taken in conjunction with the accompanying drawings.
FIG. 1 is a schematic diagram showing a processing flow of measurement results of beams.
FIG. 2 is a flow chart showing a method for determining an uplink transmission resource provided in an embodiment of the present disclosure.
FIG. 3 is a flow chart showing another method for determining an uplink transmission resource provided in an embodiment of the present disclosure.
FIG. 4 is a flow chart showing another method for determining an uplink transmission resource provided in an embodiment of the present disclosure.
FIG. 5 is a flow chart showing another method for determining an uplink transmission resource provided in an embodiment of the present disclosure.
FIG. 6 is a flow chart showing another method for determining an uplink transmission resource provided in an embodiment of the present disclosure.
FIG. 7 is a flow chart showing another method for determining an uplink transmission resource provided in an embodiment of the present disclosure.
FIG. 8 is a flow chart showing another method for determining an uplink transmission resource provided in an embodiment of the present disclosure.
FIG. 9 is a schematic diagram showing an apparatus for determining an uplink transmission resource provided in an embodiment of the present disclosure.
FIG. 10 is a schematic diagram showing another apparatus for determining an uplink transmission resource provided in an embodiment of the present disclosure.
FIG. 11 is a block diagram of a user equipment (UE) provided in an embodiment of the present disclosure.
FIG. 12 is a schematic diagram showing a network device provided in an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present disclosure are only for the purpose of describing specific embodiments, but should not be construed to limit the present disclosure. As used in the embodiments of the present disclosure and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if" may be construed to mean "when" or "upon" or "in response to determining" depending on the context.

Embodiments of the present disclosure are described in detail below, examples of which are illustrated in the accompanying drawings. The same or similar reference numerals represent the same or similar elements throughout the descriptions. The embodiments described below with reference to the accompanying drawings are illustrative, are intended to explain the present disclosure and cannot be construed as limiting the present disclosure.

Before specifically explaining embodiments of the present disclosure, common technical terms are first introduced for ease of understanding.

Small data transmission (SDT): According to an uplink transmission resource configured by a network device, a user equipment (UE) directly sends a SDT to the network device in an idle state or an inactive state in the following ways: Msg3 of a 4-step random access procedure (4-step RACH) for initial access, MsgA of a 2-step random access procedure (2-step RACH) for initial access, and a dedicated physical uplink control channel (PUSCH) resource configured by the network device, such as configured grant (CG), or a preallocated uplink resource (PUR). The network device may directly send the SDT to the UE in the following ways: Msg4 of a 4-step random access procedure for the initial access, MsgB of a 2-step random access procedure for the initial access, and a downlink feedback resource corresponding to a dedicated uplink transmission resource configured by the network device.

The network device may merely configure one cell for the UE, and the UE may use the dedicated uplink transmission resource only when uplink timing corresponding to the dedicated uplink transmission resource configured by the network device is available.

Uplink timing: after receiving a downlink signal, the UE may determine a boundary position of a subframe of the downlink signal. Due to transmission delay of a signal transmission, a network needs to ensure that signals sent by different UEs arrive at a fixed moment in order to avoid interference to an uplink signal. Therefore, the network device needs to configure an uplink timing advance (TA) for an uplink transmission of UE. After the UE receives the TA value, if the UE intends to send the uplink signal, the UE sends the uplink signal by advancing the TA value at a sending time position of an uplink subframe with reference to a downlink subframe position.

Timing advance group (TAG): In response to determining that a plurality of different cells are configured to adopt a same TA value, the plurality of different cells belong to a same TAG. Types of TAGs may include a primary TAG (PTAG) and a secondary TAG (STAG). The PTAG includes a TAG of a special cell (SpCell), for example, a TAG of a primary cell (PCell) of a master cell group (MCG), or a TAG of a primary secondary cell (PSCell) of a secondary cell group (SCG). The STAG merely includes a TAG of a secondary cell (SCell).

Under a dual connectivity (DC) architecture, two cell groups, a MCG and a SCG are included. TAGs of the MCG and the SCG are independent of each other.

For TA values of different TAGs, the network device configures the UE with a timer, namely, a time alignment timer (TAT), for determining whether the TA value is available. The UE may start or restart the TAT after receiving a timing advance command (TAC) sent by the network device. When the TAT is overtime or not running, the UE determines that the TA value of the TAG corresponding to the TAT is unavailable, namely, in an uplink out-of-step state. For a cell of the TAG in the uplink out-of-step state, the UE cannot send any uplink transmission except for a preamble (for 4-step random access procedure) and MSGA (for 2-step random access procedure).

A pathloss refers to the pathloss of a signal transmission. In a 5G system, the network device configures a corresponding downlink pathloss reference signal for measuring the pathloss for the uplink transmission signal of the UE. Based on the symmetry of the uplink and downlink transmission signals, the UE adjusts a transmission of the uplink signal according to a pathloss measurement result of the downlink pathloss reference signal. For example, the greater the pathloss, the greater the increase in uplink transmission power of the UE. A pathloss value measured by the UE is a difference obtained by subtracting received power of a signal measured by the UE from transmission power of the signal indicated by the network device.

Since there will be a plurality of different transmission beams in the 5G system, for example, a cell-1 sends downlink signals simultaneously through beam-1 of a transmission point (TRP)-1 and a beam-2 of a TRP-2. A difference in pathloss of signals sent by different transmission points or transmission beams may be relatively large, so the network device may configure a plurality of different pathloss reference signals for specific uplink transmission signals of the UE. For example, the network device may configure the plurality of different pathloss reference signals through RRC signaling. After that, the network device may dynamically indicate a pathloss reference signal adopted by the uplink transmission signal through an indication signaling. For example, the network device may use downlink control information (DCI) or a medium access control (MAC) control element (CE) to dynamically indicate a pathloss reference signal adopted by a physical uplink control channel (PUCCH), a physical uplink shared channel (PUSCH), or a sounding reference signal (SRS).

Measurement: In the 5G system, the measurement of the cell by the UE is divided into an idle state/an inactive state, and a connected state.

For the measurement of the connected state, the network device configures a specific measuring object for a frequency point or a cell that the UE needs to measure through a dedicated radio resource control (RRC) signaling. Configuration information of the measuring object may include a measurement frequency point, such as a single side band (SSB) frequency; a sub carrier spacing, such as SSB sub-carrier spacing; a time position for measurement; reference signal configuration; a beam measurement threshold that may be used to derive a cell measurement result; and a maximum number of beams that may be used to derive a cell measurement result.

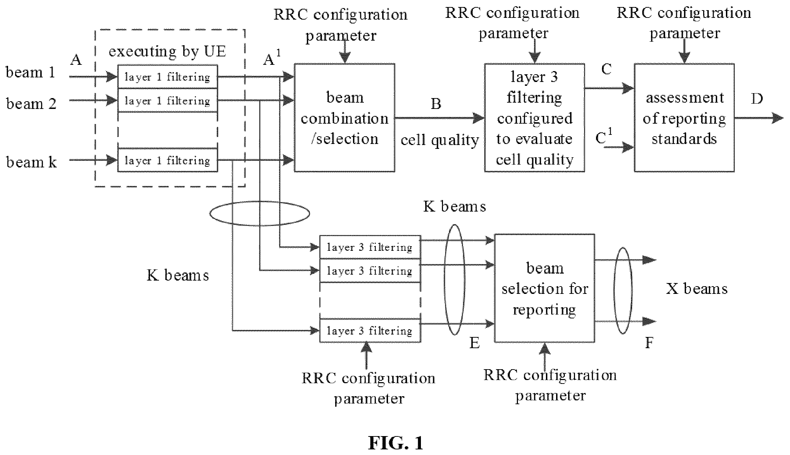

As shown in FIG. 1, the UE obtains measurement results of beams after layer 1 filtering, that is, a measurement result A in FIG. 1. Processing of the measurement results of the beams obtained by the UE after layer 1 filtering includes a first branch, and a second branch.

The first branch is to acquire a cell-level measurement result. The UE obtains the cell-level measurement result after linearly averaging beam measurement results that exceed a beam measurement threshold that may be used to derive the cell measurement result, that is, a measurement result B in FIG. 1. A number of beams used for linear averaging cannot exceed the maximum number of beams configured by the network device that may be used to derive the cell measurement result. Then, the UE obtains a measurement result for evaluating a measurement report after performing layer 3 filtering on the cell measurement result, that is, a measurement result C in FIG. 1. After an event of measurement reporting is satisfied, the cell measurement result, that is, a measurement result D in FIG. 1, is reported to the network device.

The second branch is to acquire a beam-level measurement result. The UE obtains measurement results of beams used for reporting after filtering the measurement results of the beams through the layer 3 beam measurement results, that is, a measurement result E in FIG. 1. After an event of measurement reporting is satisfied, the beam measurement result, that is, the measurement result F in FIG. 1, is reported to the network device.

A specific beam identifier includes at least one of one or more synchronous signal block (SSB) identifiers, and one or more channel state information-reference signal (CSI-RS) identifiers.

For a serving cell of the UE, the network device will configure a specific serving cell measuring object (serving Cell MO).

For the measurement of the idle state/the inactive state, the UE will measure a resident cell and a neighboring cell. Measurement information of the neighboring cell is to provide information of frequency points, cells and reference signals of cells with intra-frequency, inter-frequency, or inter-RAT to the UE through system information for measurement. For a measurement result of a cell under multi-beam, there are two acquisition modes.

Firstly, for inter-RAT reselection from evolved universal terrestrial radio access (E-UTRA) to new radio access technology (NR), the derivation for the cell measurement result of the NR is as follows. The UE obtains the cell-level measurement result after linearly averaging the beam measurement results that exceed the beam measurement threshold that may be used to derive the cell measurement result.

Secondly, in a case of non-inter-RAT reselection, the derivation of the cell measurement result of the NR depends on the implementation of the UE.

CG: The network device may configure configuration information of uplink grant for an uplink transmission of the PUSCH to the UE through the RRC signaling. The configuration information includes a sending time position and a resource of the uplink grant. The sending time position may be, for example, a period and a starting position. The resource may be, for example, a physical resource block (PRB) and a modulation and coding scheme (MCS). After receiving the configuration information of the uplink grant, the UE may immediately use the uplink grant for the uplink transmission.

**In** the prior art, when the network device configures a UE with a dedicated uplink transmission resource for an uplink transmission of the UE in the idle state or the inactive state, the dedicated uplink resource may be used only when uplink timing corresponding to the dedicated uplink resource is available. However, if the same TAT timer as in the connected state is used for the UE in the idle state or inactive state to determine whether the uplink timing is available, the UE needs to send the uplink signal. After receiving the uplink signal sent by the UE, the network device may send a TAC signaling according to the uplink signal. The UE may determine whether the uplink timing is available according to the TAC signaling, and then determine whether the corresponding uplink transmission resource is available. However, when the UE does not have actual uplink transmission requirements, for example, the UE does not have uplink data to send, and transmission of the uplink signal and reception of the TAC signaling on the network side will result in additional network overheads.

In view of the above problems, the present disclosure provides a method for determining an uplink transmission resource, an apparatus for determining an uplink transmission resource, a communication device, and a medium.

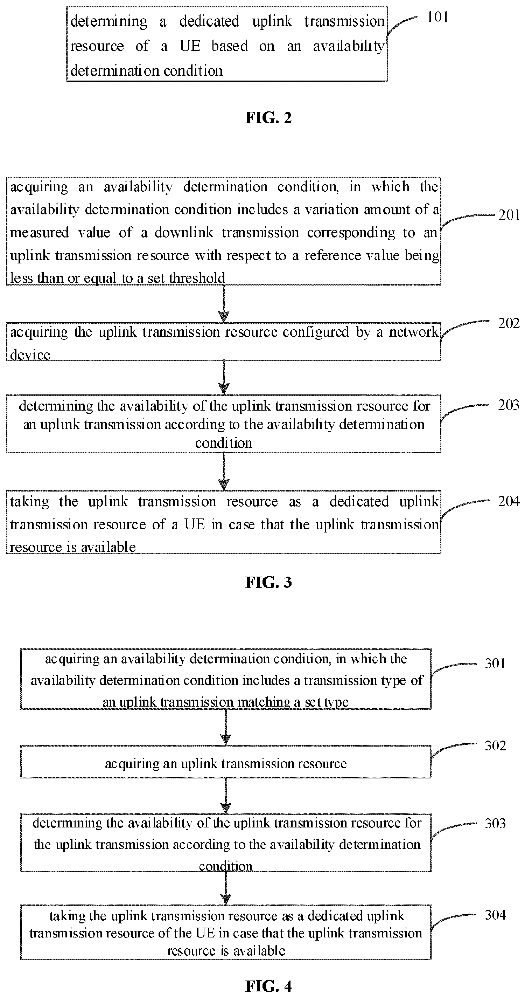

FIG. 2 is a flow chart showing a method for determining an uplink transmission resource provided in an embodiment of the present disclosure. The method is performed by a user equipment (UE), so that the UE determines a dedicated uplink transmission resource corresponding to the UE.

The network device may be a base station, and the base station may include a plurality of cells providing services for the UE. Depending on different specific applications, the base station may also be referred to as an access point, or may be a device in an access network that communicates with a wireless terminal device through one or more sectors over an air interface, or other names.

As shown in FIG. 2, the method for determining the uplink transmission resource may include the following step.

In step 101, a dedicated uplink transmission resource of the UE is determined based on an availability determination condition.

In an embodiment of the present disclosure, the availability determination condition is used to determine the availability of the uplink transmission resource for an uplink transmission. The uplink transmission may be signaling, data, a mixed signaling/data transmission, or a reference signal.

Optionally, the uplink transmission resource may be configured by the network device, or the uplink transmission resource may also be stipulated with a protocol.

Optionally, the availability determination condition may be configured by the network device, and the UE may acquire the availability determination condition from the network device. Optionally, the availability determination condition may be stipulated with a protocol and pre-configured by the UE, so that the UE may acquire the availability determination condition.

In a possible implementation of the embodiment of the present disclosure, the availability determination condition may include a variation amount of a measured value of a downlink transmission corresponding to the uplink transmission resource with respect to a reference value being less than or equal to a set threshold. The downlink transmission may be signaling, data, a mixed signaling/data transmission, or a reference signal.

Optionally, the set threshold may be configured by the network device, or stipulated with a protocol and pre-configured by the UE.

In another possible implementation of the embodiment of the present disclosure, the availability determination condition may include a transmission type of an uplink transmission matching a set type. The set type may be the transmission type configured for the uplink transmission resource.

In yet another possible implementation of the embodiment of the present disclosure, the availability determination condition may include a variation amount of a measured value of a downlink transmission corresponding to the uplink transmission resource with respect to a reference value being less than or equal to a set threshold, and a transmission type of an uplink transmission matching a set type.

In the embodiment of the present disclosure, the network device may configure the uplink transmission resource for the UE and send a configured uplink transmission resource for the UE. Accordingly, the UE may acquire the above-mentioned uplink transmission resource and determine the availability of the uplink transmission resource configured by the network device based on the availability determination condition. Optionally, the uplink transmission resource may be stipulated with a protocol, and the UE may determine the availability of the uplink transmission resource stipulated with the protocol based on the availability determination condition.

Specifically, the UE may determine the availability of the uplink transmission resource for the uplink transmission according to the measured value of the downlink transmission corresponding to the uplink transmission resource or the transmission type of the uplink transmission. Moreover, the UE may also determine the availability of the uplink transmission resource for the uplink transmission according to the above-mentioned measured value and the transmission type of the uplink transmission. Several possible implementations are described respectively below.

In a possible implementation of the embodiment of the present disclosure, when the availability determination condition includes the variation amount of the measured value of the downlink transmission corresponding to the uplink transmission resource with respect to the reference value being less than or equal to the set threshold, the UE may measure the downlink transmission corresponding to the uplink transmission resource to determine the measured value of the downlink transmission corresponding to the uplink transmission resource, and calculate the variation amount between the measured value and the reference value. After that, the UE may determine whether the variation amount of the measured value of the downlink transmission corresponding to the uplink transmission resource with respect to the reference value is less than or equal to the set threshold. In case that the variation amount of the measured value of the downlink transmission corresponding to the uplink transmission resource with respect to the reference value is less than or equal to the set threshold, it is determined that the uplink transmission resource is available. In case that the variation amount of the measured value of the downlink transmission corresponding to the uplink transmission resource with respect to the reference value is greater than the set threshold, it is determined that the uplink transmission resource is unavailable.

In the embodiment of the present disclosure, in case that the uplink transmission resource is available, the uplink transmission resource may be taken as the dedicated uplink transmission resource of the UE.

It is to be noted that the above-mentioned variation amount between the measured value and the reference value may be a relative variation amount between the measured value and the reference value, or an absolute variation amount between the measured value and the reference value. When the variation amount between the measured value and the reference value is the absolute variation amount, the set threshold is a fixed value. When the variation amount is the relative variation amount, a value of the set threshold is related to a subtrahend and a minuend. For example, when the variation amount is a value of the measured value minus the reference value, the set threshold may be threshold 1. When the variation amount is a value of the reference value minus the measured value, the set threshold may be threshold 2. Values of the threshold 1 and the threshold 2 may be the same or different, which is not limited in the present disclosure.

In another possible implementation of the embodiment of the present disclosure, when the availability determination condition includes the transmission type of the uplink transmission matching the set type, the UE may determine whether the transmission type of the uplink transmission to be sent currently matches the set type corresponding to the uplink transmission resource. In case that the transmission type of the uplink transmission matches the set type corresponding to the uplink transmission resource, it is determined that the uplink transmission resource is available. In case that the transmission type of the uplink transmission does not match the set type corresponding to the uplink transmission resource, it is determined that the uplink transmission resource is unavailable.

In an embodiment of the present disclosure, in case that the uplink transmission resource is available, the uplink transmission resource may be taken as the dedicated uplink transmission resource of the UE.

It is to be noted that when the uplink transmission resource is not configured with the set type, the transmission type of the uplink transmission may be determined, which matches the set type of the uplink transmission resource. That is, in the embodiment of the present disclosure, it is possible to determine the uplink transmission resource which is not configured with the set type, and an uplink transmission resource which is configured with the set type matching the transmission type of the uplink transmission. A determined uplink transmission resource is taken as the dedicated uplink transmission resource of the UE.

In yet another possible implementation of the embodiment of the present disclosure, when the availability determination condition simultaneously includes the variation amount of the measured value of the downlink transmission corresponding to the uplink transmission resource with respect to the reference value being less than or equal to the set threshold, and the transmission type of the uplink transmission matching the set type, the UE may determine whether the variation amount of the measured value of the downlink transmission corresponding to the uplink transmission resource with respect to the reference value is less than or equal to the set threshold, and determine whether the transmission type of the uplink transmission to be sent currently matches the set type corresponding to the uplink transmission resource. In case that the variation amount of the measured value of the downlink transmission corresponding to the uplink transmission resource with respect to the reference value is less than or equal to the set threshold, and the transmission type of the uplink transmission matches the set type corresponding to the uplink transmission resource, it is determined that the uplink transmission resource is available. In case that the variation amount of the measured value of the downlink transmission corresponding to the uplink transmission resource with respect to the reference value is greater than the set threshold, and/or the transmission type of the uplink transmission does not match the set type corresponding to the uplink transmission resource, it is determined that the uplink transmission resource is unavailable.

In an embodiment of the present disclosure, in case that the uplink transmission resource is available, the uplink transmission resource may be taken as the dedicated uplink transmission resource of the UE.

Optionally, it may be first determined whether the set type configured for the uplink transmission resource matches the transmission type of the uplink transmission to be sent currently. In case that the set type configured for the uplink transmission resource matches the transmission type of the uplink transmission to be sent currently, it may be further determined whether the variation amount of the measured value of the downlink transmission corresponding to the uplink transmission resource with respect to the reference value is greater than the set threshold. When the variation amount is less than or equal to the set threshold, it is determined that the uplink transmission resource is available. At this time, the uplink transmission resource may be taken as the dedicated uplink transmission resource of the UE.

Optionally, it may be first determined whether the variation amount of the measured value of the downlink transmission corresponding to the uplink transmission resource with respect to the reference value is greater than the set threshold. When the variation amount is less than or equal to the set threshold, it may be further determined whether the set type configured for the uplink transmission resource matches the transmission type of the uplink transmission to be sent currently. In case that the set type configured for the uplink transmission resource matches the transmission type of the uplink transmission to be sent currently, it may be determined that the uplink transmission resource is available. At this time, the uplink transmission resource may be taken as the dedicated uplink transmission resource of the UE.

It is to be noted that when the uplink transmission resource is not configured with the set type, the transmission type of the uplink transmission may be determined, which matches the set type of the uplink transmission resource.

Therefore, the UE may determine the availability of the uplink transmission resource merely by measuring the downlink transmission corresponding to the uplink transmission resource, and/or by determining whether the transmission type of the uplink transmission to be sent matches the set type corresponding to the uplink transmission resource. In case that the uplink transmission resource is available, the uplink transmission resource is taken as the dedicated uplink transmission resource of the UE. Therefore, the UE does not need to send the uplink signal to the network device and receive the downlink signal sent by the network device to determine the availability of the uplink transmission resource, such that network overheads may be reduced.

Optionally, in case that it is determined that the uplink transmission resource is available, the UE may take the uplink transmission resource as the dedicated uplink transmission resource of the UE, so that the dedicated uplink transmission resource may be used for uplink transmission. In case that it is determined that the uplink transmission resource is unavailable, the UE may release the uplink transmission resource. For example, the UE may release the RRC configuration corresponding to the uplink transmission resource. Optionally, the UE may suspend the uplink transmission resource. For example, the UE may keep the RRC configuration corresponding to the uplink transmission resource, but suspend the uplink transmission resource. When the uplink transmission resource is in a suspended state, the UE does not use the uplink transmission resource for the uplink transmission.

Optionally, in case that it is determined that the uplink transmission resource is available, the UE may also determine whether the uplink transmission satisfies a sending condition corresponding to the uplink transmission resource. For example, the UE determines whether a sent data volume corresponding to the uplink transmission is less than a data volume threshold configured by the network device. In case that the sent data volume is less than the data volume threshold configured by the network device, it is determined that the uplink transmission satisfies the sending condition corresponding to the uplink transmission resource. At this time, the UE may adopt the uplink transmission resource for the uplink transmission. For example, when the UE intends to send specific uplink data, the uplink data of a specific bearer may be carried in a PUSCH of the uplink transmission resource.

In the method for determining the uplink transmission resource in the embodiment of the present disclosure, the dedicated uplink transmission resource of the UE is determined by the UE based on the availability determination condition, in which the availability determination condition includes the variation amount of the measured value of the downlink transmission corresponding to the uplink transmission resource with respect to the reference value being less than or equal to the set threshold, and/or the transmission type of the uplink transmission matching the set type. Therefore, the UE may determine the availability of the uplink transmission resource merely by measuring the downlink transmission corresponding to the uplink transmission resource, and/or by determining whether the transmission type of the uplink transmission to be sent matches the set type corresponding to the uplink transmission resource. In case that the uplink transmission resource is available, the uplink transmission resource is taken as the dedicated uplink transmission resource of the UE. Thus, the UE does not need to send the uplink signal to the network device and receive the downlink signal sent by the network device to determine the availability of the uplink transmission resource, such that network overheads may be reduced.

An embodiment of the present disclosure provides another method for determining an uplink transmission resource. FIG. 3 is a flow chart showing another method for determining an uplink transmission resource provided in an embodiment of the present disclosure. The method is performed by a user equipment (UE), such that the UE determines the availability of a configured uplink transmission resource when a network device configures the uplink transmission resource for the UE.

The network device may be a base station, and the base station may include a plurality of cells providing services for the UE. Depending on different specific applications, the base station may also be referred to as an access point, or may be a device in an access network that communicates with a wireless terminal device through one or more sectors over an air interface, or other names.

As shown in FIG. 3, the method for determining the uplink transmission resource may include following steps.

In step 201, an availability determination condition is acquired, in which the availability determination condition includes a variation amount of a measured value of a downlink transmission corresponding to the uplink transmission resource with respect to a reference value being less than or equal to a set threshold.

The set threshold may be configured by the network device, or stipulated with a protocol and pre-configured by the UE.

The availability determination condition is configured to determine the availability of the uplink transmission resource for an uplink transmission. Optionally, the availability determination condition may be configured by the network device, and the UE may acquire the availability determination condition from the network device. Optionally, the availability determination condition may be stipulated with a protocol and pre-configured by the UE, so that the UE may acquire the availability determination condition.

The uplink transmission resource may be configured for an uplink transmission in an idle state or an inactive state, and the uplink transmission may be signaling, data, a mixed signaling/data transmission, or a reference signal.

Optionally, the uplink transmission resource may have corresponding frequency indication information. The frequency indication information may be configured by the network device, or stipulated with a protocol and pre-configured by the UE. The frequency indication information may include one or a combination of ones of a cell identifier, a frequency point identifier, a bandwidth, a bandwidth part (BWP) identifier, a cell group identifier, and a timing advance group (TAG) identifier. The cell identifier may include one or a combination of ones of a physical cell identifier (PCI), a serving cell identifier, and a secondary cell identifier (SCell). The frequency point identifier may be, for example, an absolute radio frequency channel number (ARFCN). The cell group identifier may be, for example, a MCG, or a SCG.

The reference value may be obtained by measuring the downlink transmission by a UE in a connected state before or when a network device configures the uplink transmission resource or releases a connection with the UE. Correspondingly, the measured value may be obtained by measuring the downlink transmission by the UE in the idle state or the inactive state after the network device configures the uplink transmission resource or releases the connection with the UE.

For example, when the UE receives the uplink transmission resource configured by the network device through a RRC release message at time t, the reference value may be an available measurement result obtained by measuring the downlink transmission by the UE in the connected state at time *(t-t₁),* where *t*₁ is a value greater than or equal to 0 and less than or equal to *t*ₓ, and *t*ₓ may be stipulated with a protocol or configured by the network device. The measured value may be a measurement result obtained by measuring the downlink transmission by the UE in the idle state or the inactive state after time t.

In a possible implementation of the embodiment of the present disclosure, the reference value may be obtained by measuring a downlink transmission by the UE for the last time from the time when the network device configures the uplink transmission resource or releases the connection with the UE, before or when the network device configures the uplink transmission resource or releases the connection with the UE.

For example, when the UE receives the uplink transmission resource configured by the network device through the RRC release message at time *t,* the reference value may be an available measurement result obtained by measuring the downlink transmission by the UE in the connected state at time *(t-t₁),* where *(t-t₁)* is a time corresponding to the available measurement result obtained by a latest measurement by UE from the time *t*, and *t*₁ may be stipulated with a protocol or configured by the network device.

In another possible implementation of the embodiment of the present disclosure, the reference value may obtained by measuring the downlink transmission when or before the UE receives an uplink timing adjustment command corresponding to the uplink transmission resource for the last time.

For example, at time *t*₁, the UE receives an uplink timing adjustment command for a cell 1 sent by the network device. The uplink timing adjustment command may be a last uplink timing adjustment command for the cell 1 received by the UE before or when the UE receives the uplink transmission resource configured by the network device. The UE receives the uplink transmission resource configured for the UE and sent by the network device at time *t*₂, and the uplink transmission resource corresponds to the cell 1, then the UE may take a measurement result obtained by measuring the downlink transmission as the reference value when or before receiving the uplink timing adjustment command.

Optionally, when or before the UE receives the uplink timing adjustment command, the measurement result obtained by measuring the downlink transmission is the available measurement result obtained by measuring the downlink transmission for the last time from a time when the uplink timing adjustment command is received.

In a possible implementation, the above-mentioned reference value may be obtained by measuring a set measurement item of a set measuring object for downlink transmission by the UE in the connected state before or when the network device configures the uplink transmission resource or releases the connection with the UE.

The set measuring object of the reference value may include at least one of a set cell, a set beam, or a set measurement signal. The set measurement signal may be, for example, a set pathloss reference signal, and a signal type of the set measurement signal may include at least one of a synchronous signal block (SSB), and a channel state information-reference signal (CSI-RS).

The set measurement item may include one or a combination of ones of a reference signal received power (RSRP), a reference signal received quality (RSRQ), a signal to interference and noise ratio (SINR), and a pathloss. When the set measurement item includes the pathloss, the set measurement signal may be the pathloss reference signal corresponding to the uplink transmission resource configured by the network device. For example, configuration information of the network device may include resource locations at different time and/or frequencies, and different resource locations correspond to different pathloss reference signals.

The set cell may be configured by the network device, or stipulated with a protocol and pre-configured by the UE.

For example, the reference value obtained by measuring the downlink transmission by the UE in the connected state before or when the network device configures the uplink transmission resource or releases the connection with the UE may be a measurement result of the set cell, a measurement result of the set beam, or a pathloss reference measurement result of the pathloss reference signal. The measurement result of the set cell may include a cell measurement result of the set cell specified by the network device, a measurement result of the set measuring object of the set cell specified by the network device, a measurement result of a service measuring object of a primary cell, a measurement result of an initial BWP of the primary cell, a measurement result of the cell corresponding to the uplink transmission resource, and a measurement result of the BWP of the cell corresponding to the uplink transmission resource.

The cell measurement result in the above-mentioned example may include a cell measurement result before layer 3 filtering in FIG. 1 (such as a cell measurement result B), a cell measurement result after layer 3 filtering in FIG. 1 (such as a cell measurement result C), and a reported cell measurement result measured in FIG. 1 (such as a cell measurement result D).

The measurement result of the set beam in the above-mentioned example may include a beam measurement result before layer 3 filtering in FIG. 1 (such as a cell measurement result K), a beam measurement result after layer 3 filtering in FIG. 1 (such as a cell measurement result E), a reported beam measurement result measured in FIG. 1 (such as a cell measurement result F), a measurement result corresponding to a beam with a largest measured value, a measurement result of the beam corresponding to the uplink transmission resource configured by the network device to the UE, a measurement result of a beam indicated by the network device, a measurement result corresponding to a beam with a measured value being greater than or equal to a beam measurement threshold configured by the network device or stipulated with a protocol, a measurement result corresponding to a beam with a measured value being less than or equal to a beam measurement threshold configured by the network device or stipulated with a protocol, and a measurement result of a beam corresponding to a resource selected by the UE for the uplink transmission.

That is, the set beam in the embodiment of the present disclosure may include one or a combination of ones of the beam with the largest measured value in the set cell, the beam corresponding to the uplink transmission resource configured by the network device, the beam indicated by the network device, the beam with the measured value being greater than or equal to the beam measurement threshold, the beam with the measured value being less than or equal to the beam measurement threshold, and the beam corresponding to the resource selected by the UE for the uplink transmission. An identifier of the beam may be at least one of a SSB identifier, or a CSI-RS identifier.

In a possible implementation, the measured value may be obtained by measuring the set measurement item of the set measuring object for the downlink transmission by the UE in the idle state or the inactive state after the network device configures the uplink transmission resource or releases the connection with the UE.

The set measuring object of the measured value may include at least one of a set cell, a set beam, or a set measurement signal. A signal type of the set measurement signal may include at least one of a SSB, or a CSI-RS. The set measurement item may include one or a combination of ones of a RSRP, a RSRQ, a SINR, and a pathloss.

The set measurement signal may be a measurement signal determined according to configuration information of the network device and configured for cell selection or reselection, or dedicated to obtaining the measured value and/or the reference value. For example, the network device may configure the configuration information configured for cell selection or reselection, or dedicated to obtaining the measured value and/or the reference value through system information, or the network device may configure the above-mentioned configuration information through UE-specific signaling, such as a RRC release message.

The configuration information of the network device may include one or a combination of ones of frequency indication information, a sub carrier spacing, a measurement time interval, reference signal configuration, a beam measurement threshold that may be used to derive a cell measured value, a maximum number of beams that may be used to derive a cell measured value, a beam identifier, and a signal identifier (such as an identifier of a pathloss reference signal).

The measurement result of the set cell may include an average measurement result of beams whose measured values are greater than a beam measurement threshold in the set cell, and/or a maximum measurement result in beams of the set cell. A number of beams used for linear averaging needs to be less than a beam number threshold configured by the network device or stipulated with a protocol.

The measurement result of the set beam may include a maximum measurement result in beams of the set cell, a measurement result of the beam corresponding to the uplink transmission resource configured by the network device, a measurement result of the set beam (such as a measurement result of a beam specified by the network device through the RRC release message), a measurement result corresponding to the beam whose measured value is greater than or equal to the beam measurement threshold configured by the network device or stipulated with the protocol, a measurement result corresponding to the beam whose measured value is less than or equal to the beam measurement threshold configured by the network device or stipulated with the protocol, and a measurement result of a downlink beam corresponding to the resource used by the UE for the uplink transmission (for example, the configuration information of the network device may include resource positions at different time and/or frequencies, and different resource positions correspond to different beams, such as beam-1 and beam-2. When the UE selects a resource corresponding to the beam-1 for an uplink transmission, a measurement result of the beam-1 may be the measurement result of the set beam).

That is, the set beam in the embodiment of the present disclosure may include one or a combination of ones of a beam with a largest measured value in the set cell, a beam corresponding to the uplink transmission resource configured by the network device, a beam indicated by the network device, a beam with a measured value being greater than or equal to a beam measurement threshold, a beam with a measured value being less than or equal to the beam measurement threshold, and a beam corresponding to a resource selected by the UE for the uplink transmission. An identifier of the beam may be at least one of a SSB identifier, or a CSI-RS identifier.

When the set measurement item includes the pathloss, the set measurement signal may be the pathloss reference signal corresponding to the uplink transmission resource configured by the network device. For example, the configuration information of the network device may include resource locations at different time and/or frequencies, and different resource locations correspond to different pathloss reference signals, such as SSB-1 and SSB-2. When the UE selects a resource corresponding to the SSB-1 for the uplink transmission, a measurement result of the SSB-1 may be the measurement result of the set measurement signal.

Optionally, in the above-mentioned embodiment, a set measuring object for measuring the reference value and a set measuring object for measuring the measured value may satisfy at least one of frequency indication information being the same (for example, if the above-mentioned reference value is the measurement result of the initial BWP of the cell-1, the measured value of the downlink transmission corresponding to the uplink transmission resource is also the measurement result of the initial BWP of the cell-1), signal types being the same (for example, if the above-mentioned reference value is the measurement result of the SSB of the cell-1, the measured value of the downlink transmission corresponding to the uplink transmission resource is also the measurement result of the SSB of the cell-1), the set measurement items being the same (for example, if the reference value is the measurement result of the pathloss of the cell-1, the measured value of the downlink transmission corresponding to the uplink transmission resource is also the measurement result of the pathloss), the set beams being the same (for example, if the reference value is the measurement result of the beam SSB-1, the measurement value of the downlink transmission corresponding to the uplink transmission resource is also the measurement result of the beam SSB-1), and the set measurement signals being the same (for example, if the reference value is the measurement result of the pathloss reference signal SSB-1, the measured value of the downlink transmission corresponding to the uplink transmission resource is also the measurement result of the pathloss reference signal SSB-1), the maximum number of beams being the same (that is, when the reference value and the measured value are measurement results of the set cell, the maximum number of beams that may be used to derive the cell measurement result is the same), and the beam measurement thresholds being the same (that is, when the reference value and the measured value are measurement results of the set cell, the beam measurement thresholds that may be used to derive the cell measurement result is the same).

In step 202, the uplink transmission resource configured by the network device is acquired.

In an embodiment of the present disclosure, the network device may configure the uplink transmission resource for the UE and transmit the uplink transmission resource to the UE. Accordingly, the UE may acquire the above-mentioned uplink transmission resource.

It is to be noted that the present disclosure merely exemplifies that step 202 is executed after step 201. In practical application, step 202 may be executed before step 201, or step 202 may be executed in parallel with step 201, which is not limited in the present disclosure.

In step 203, the availability of the uplink transmission resource for an uplink transmission is determined according to the availability determination condition.

In an embodiment of the present disclosure, the UE may measure the downlink transmission corresponding to the uplink transmission resource to determine the measured value of the downlink transmission corresponding to the uplink transmission resource, and calculate the variation amount between the measured value and the reference value. The variation amount may be a relative variation amount between the measured value and the reference value, or an absolute variation amount between the measured value and the reference value. After that, it may be determined whether the variation amount is less than or equal to a set threshold. When the variation amount is less than or equal to the set threshold, it may be determined that the uplink transmission resource is available, and when the variation amount is greater than the set threshold, it may be determined that the uplink transmission resource is unavailable.

It is to be noted that when the variation amount between the measured value and the reference value is the absolute variation amount, the set threshold is a fixed value. When the variation amount is the relative variation amount, a value of the set threshold is related to a subtrahend and a minuend. For example, when the variation amount is a value of the measured value minus the reference value, the set threshold may be threshold 1. When the variation amount is a value of the reference value minus the measured value, the set threshold may be threshold 2. Values of the threshold 1 and the threshold 2 may be the same or different, which is not limited in the present disclosure.

In step 204, in case that the uplink transmission resource is available, the uplink transmission resource is taken as a dedicated uplink transmission resource of the UE.

Optionally, in case that it is determined that the uplink transmission resource is available, the UE may take the uplink transmission resource as the dedicated uplink transmission resource of the UE, so that the UE may adopt the dedicated uplink transmission resource for the uplink transmission. In case that it is determined that the uplink transmission resource is unavailable, the UE may release the uplink transmission resource. For example, the UE may release the RRC configuration corresponding to the uplink transmission resource. Optionally, the UE may suspend the uplink transmission resource. For example, the UE may keep the RRC configuration corresponding to the uplink transmission resource, but suspend the uplink transmission resource. When the uplink transmission resource is in a suspended state, the UE does not use the uplink transmission resource for the uplink transmission.

Optionally, in case that it is determined that the uplink transmission resource is available, the UE may also determine whether the uplink transmission satisfies a sending condition corresponding to the uplink transmission resource. For example, the UE determines whether the sent data volume corresponding to the uplink transmission is less than a data volume threshold configured by the network device. In case that the sent data volume is less than the data volume threshold configured by the network device, it is determined that the uplink transmission satisfies the sending condition corresponding to the uplink transmission resource. At this time, The UE may adopt the uplink transmission resource for the uplink transmission. For example, when the UE intends to send specific uplink data, the uplink data of a specific bearer may be carried in a PUSCH of the uplink transmission resource.

In a possible implementation of the embodiment of the present disclosure, the uplink transmission resource may also be configured with a set measurement signal. After the network device configures the set measurement signal for the uplink transmission resource, in case that the UE determines that the uplink transmission resource is available, the set measurement signal configured in the uplink transmission resource may be adopted to perform cell selection or reselection. For example, the UE no longer adopts the measurement signal for cell selection or reselection configured in system information for measurement, but adopts the set measurement signal configured in the uplink transmission resource for measurement of cell selection or reselection.

In case that the UE determines that the uplink transmission resource is unavailable, it may stop adopting the set measurement signal configured in the uplink transmission resource for measurement. For example, the set measurement signal configured in the uplink transmission resource may be deleted.

In the method for determining the uplink transmission resource in the embodiment of the present disclosure, the availability determination condition is acquired by the UE, in which the availability determination condition includes the variation amount of the measured value of the downlink transmission corresponding to the uplink transmission resource with respect to the reference value being less than or equal to the set threshold. The uplink transmission resource configured by the network device is acquired to determine the availability of the uplink transmission resource for the uplink transmission according to the availability determination condition. In case that the uplink transmission resource is available, the uplink transmission resource is taken as the dedicated uplink transmission resource of the UE. Therefore, the UE may determine the availability of the uplink transmission resource merely by measuring the downlink transmission corresponding to the uplink transmission resource, without sending an uplink signal to the network device and receiving a downlink signal sent by the network device to determine the availability of the uplink transmission resource, such that network overheads may be reduced.

An embodiment of the present disclosure provides another method for determining an uplink transmission resource. FIG. 4 is a flow chart showing another method for determining an uplink transmission resource provided in an embodiment of the present disclosure. The method is performed by a user equipment (UE), so that the UE determines a dedicated uplink transmission resource corresponding to the UE.

The network device may be a base station, and the base station may include a plurality of cells providing services for the UE. Depending on different specific applications, the base station may also be referred to as an access point, or may be a device in an access network that communicates with a wireless terminal device through one or more sectors over an air interface, or other names.

As shown in FIG. 4, the method for determining the uplink transmission resource may include following steps.

In step 301, an availability determination condition is acquired, in which the availability determination condition includes a transmission type of an uplink transmission matching a set type.

The set type may be the transmission type configured for the uplink transmission resource.

In an embodiment of the present disclosure, the availability determination condition is configured to determine the availability of the uplink transmission resource for the uplink transmission. Optionally, the availability determination condition may be configured by the network device, and the UE may acquire the availability determination condition from the network device. Optionally, the availability determination condition may be stipulated with a protocol and pre-configured by the UE, so that the UE may acquire the availability determination condition.

The uplink transmission may be signaling, data, a mixed signaling/data transmission, or a reference signal.

Optionally, the uplink transmission resource may have corresponding frequency indication information. The frequency indication information may be configured by the network device, or stipulated with a protocol and pre-configured by the UE. The frequency indication information may include one or a combination of ones of a cell identifier, a frequency point identifier, a bandwidth, a bandwidth part (BWP) identifier, a cell group identifier, and a timing advance group (TAG) identifier. The cell identifier may include one or a combination of ones of a physical cell identifier (PCI), a serving cell identifier, and a secondary cell identifier (SCell). The frequency point identifier may be, for example, an absolute radio frequency channel number (ARFCN). The cell group identifier may be, for example, a MCG, or a SCG.

In an embodiment of the present disclosure, an identifier representing the transmission type includes one or a combination of ones of a bearer identifier, a bearer type identifier, a data flow identifier, a session identifier, a logic channel identifier (LCID), and a cell group identifier corresponding to a service, and an uplink transmission resource type. The bearer identifier may be, for example, a data radio bearer (DRB) identifier; or a bearer type identifier, for example, a MCG bearer, a SCG bearer, and a split bearer.

The uplink transmission resource type may include one or a combination of ones of an uplink transmission on a physical uplink shared channel (PUSCH), an uplink transmission on a physical uplink control channel (PUCCH), and an uplink sounding signal. The uplink sounding signal may be, for example, a sounding reference signal (SRS).

In the embodiment of the present disclosure, when the uplink transmission resource type is the uplink transmission on the PUSCH, uplink grant may be taken as the uplink transmission resource for the uplink transmission on the PUSCH.

In step 302, an uplink transmission resource is acquired.

In a possible implementation of the embodiment of the present disclosure, the network device may configure the uplink transmission resource for the UE and send the uplink transmission resource to the UE, and accordingly the UE may obtain the uplink transmission resource.

In a possible implementation of the embodiment of the present disclosure, the uplink transmission resource may also be stipulated with a protocol and pre-configured by the UE, so that the UE may acquire the uplink transmission resource.

It is to be noted that the present disclosure merely exemplifies that step 302 is executed after step 301. In practical application, step 302 may be executed before step 301, or step 302 may be executed in parallel with step 301, which is not limited in the present disclosure.

In step 303, the availability of the uplink transmission resource for the uplink transmission is determined according to the availability determination condition.

In an embodiment of the present disclosure, the UE may determine whether the set type corresponding to the uplink transmission resource matches the transmission type of the uplink transmission to be sent. In case that the set type matches the transmission type of the uplink transmission, it is determined that the uplink transmission resource is available. In case that the set type does not match the transmission type of the uplink transmission, it is determined that the uplink transmission resource is unavailable.

In step 304, in case that the uplink transmission resource is available, the uplink transmission resource is taken as a dedicated uplink transmission resource of the UE.

It is to be noted that when the uplink transmission resource is not configured with the set type, the transmission type of the uplink transmission may be determined, which matches the set type of the uplink transmission resource. That is, in the embodiment of the present disclosure, it is possible to determine the uplink transmission resource which is not configured with the set type, and an uplink transmission resource which is configured with the set type matching the transmission type of the uplink transmission. A determined uplink transmission resource is taken as the dedicated uplink transmission resource of the UE.

Optionally, in case that it is determined that the uplink transmission resource is available, the UE may take the uplink transmission resource as the dedicated uplink transmission resource of the UE, so that the UE may adopt the dedicated uplink transmission resource for the uplink transmission. In case that it is determined that the uplink transmission resource is unavailable, the UE may release the uplink transmission resource. For example, the UE may release the RRC configuration corresponding to the uplink transmission resource. Optionally, the UE may suspend the uplink transmission resource. For example, the UE may keep the RRC configuration corresponding to the uplink transmission resource, but suspend the uplink transmission resource. When the uplink transmission resource is in a suspended state, the UE does not use the uplink transmission resource for the uplink transmission.

Further, in case that it is determined that the uplink transmission resource is available, the UE may also determine whether the uplink transmission satisfies a sending condition corresponding to the uplink transmission resource. For example, the UE determines whether a sent data volume corresponding to the uplink transmission is less than a data volume threshold configured by the network device. In case that the sent data volume is less than the data volume threshold configured by the network device, it is determined that the uplink transmission satisfies the sending condition corresponding to the uplink transmission resource. At this time, The UE may adopt the uplink transmission resource for the uplink transmission. For example, when the UE intends to send specific uplink data, the uplink data of a specific bearer may be carried in a PUSCH of the uplink transmission resource.

In the method for determining the uplink transmission resource in the embodiment of the present disclosure, the availability determination condition is acquired by the UE, in which the availability determination condition includes the transmission type of the uplink transmission matching the set type. The uplink transmission resource is acquired to determine the availability of the uplink transmission resource for the uplink transmission according to the availability determination condition. In case that the uplink transmission resource is available, the uplink transmission resource is taken as the dedicated uplink transmission resource of the UE. Therefore, the UE may determine the availability of the uplink transmission resource by determining whether the transmission type of the uplink transmission to be sent matches the set type corresponding to the uplink transmission resource, without sending an uplink signal to the network device and receiving a downlink signal sent by the network device to determine the availability of the uplink transmission resource, such that network overheads may be reduced.

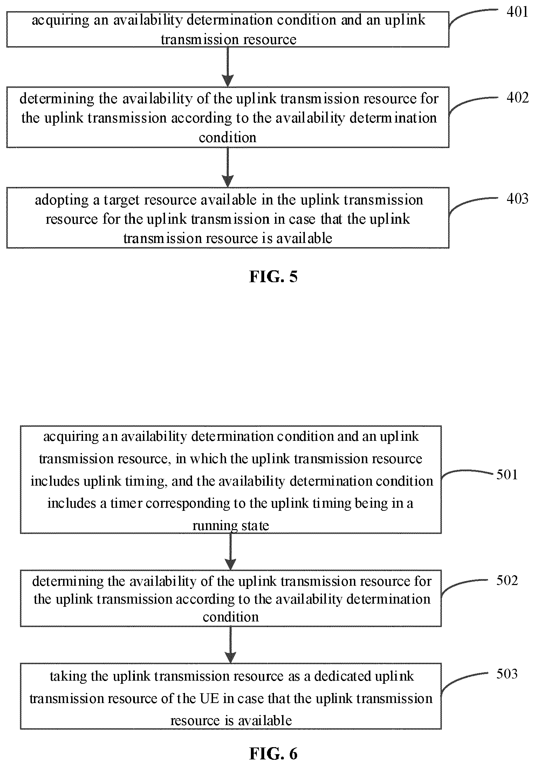

An embodiment of the present disclosure provides another method for determining an uplink transmission resource. FIG. 5 is a flow chart showing another method for determining an uplink transmission resource provided in an embodiment of the present disclosure. The method is performed by a user equipment (UE), so that the UE determines a dedicated uplink transmission resource corresponding to the UE.

The network device may be a base station, and the base station may include a plurality of cells providing services for the UE. Depending on different specific applications, the base station may also be referred to as an access point, or may be a device in an access network that communicates with a wireless terminal device through one or more sectors over an air interface, or other names.

As shown in FIG. 5, the method for determining the uplink transmission resource may include following steps.

In step 401, an availability determination condition and an uplink transmission resource are acquired.

The uplink transmission resource may be configured by a network device, or stipulated with a protocol.

It is to be noted that in the prior art, when the network device configures the uplink transmission resource for the UE, the UE adopts a unique set of uplink transmission resources to send a plurality of service data of different transmission types. Due to the different arrival time of data, the UE uses a set of uplink transmission resources to send service data of different transmission types, which may increase the transmission delay of uplink data.

Therefore, in an embodiment of the present disclosure, in order to reduce the transmission delay of data, the network device may configure a plurality of sets of uplink transmission resources for the UE, or a plurality of sets of uplink transmission resources may be stipulated with the protocol. At least one set of uplink transmission resources in the plurality of sets of uplink transmission resources is provided with a corresponding set type.

In the embodiment of the present disclosure, the availability determination condition is used to determine the availability of the uplink transmission resource for the uplink transmission. The uplink transmission may be signaling, data, a mixed signaling/data transmission, or a reference signal.

Optionally, the availability determination condition may be configured by the network device, and the UE may acquire the availability determination condition from the network device. Optionally, the availability determination condition may be stipulated with a protocol and pre-configured by the UE, so that the UE may acquire the availability determination condition.

In a possible implementation of the embodiment of the present disclosure, the availability determination condition may include a variation amount of a measured value of a downlink transmission corresponding to the uplink transmission resource with respect to a reference value being less than or equal to a set threshold. The downlink transmission may be signaling, data, a mixed signaling/data transmission, or a reference signal.

Optionally, the set threshold may be configured by the network device, or stipulated with a protocol and pre-configured by the UE.

In another possible implementation of the embodiment of the present disclosure, the availability determination condition may include a transmission type of an uplink transmission matching a set type. The set type may be the transmission type configured for the uplink transmission resource.

In yet another possible implementation of the embodiment of the present disclosure, the availability determination condition may include a variation amount of a measured value of a downlink transmission corresponding to the uplink transmission resource with respect to a reference value being less than or equal to a set threshold, and a transmission type of an uplink transmission matching a set type.

In step 402, the availability of the uplink transmission resource for the uplink transmission is determined according to the availability determination condition.

In the embodiment of the present disclosure, the UE may determine the availability of the uplink transmission corresponding to the uplink transmission resource according to the availability determination condition. Specifically, the UE may determine the availability of the uplink transmission resource for the uplink transmission according to the measured value of the downlink transmission corresponding to the uplink transmission resource or the transmission type of the uplink transmission. Moreover, the UE may also determine the availability of the uplink transmission resource for the uplink transmission according to the above-mentioned measured value and the transmission type of the uplink transmission. Several possible implementations are described respectively below.

In a possible implementation of the embodiment of the present disclosure, when the availability determination condition includes the variation amount of the measured value of the downlink transmission corresponding to the uplink transmission resource with respect to the reference value being less than or equal to the set threshold, the UE may measure the downlink transmission corresponding to the uplink transmission resource to determine the measured value of the downlink transmission corresponding to the uplink transmission resource, and calculate the variation amount between the measured value and the reference value. The variation amount may be a relative variation amount between the measured value and the reference value, or an absolute variation amount between the measured value and the reference value. After that, the UE may determine whether the variation amount of the measured value of the downlink transmission corresponding to the uplink transmission resource with respect to the reference value is less than or equal to a set threshold. In case that the variation amount of the measured value of the downlink transmission corresponding to the uplink transmission resource with respect to the reference value is less than or equal to the set threshold, it is determined that the uplink transmission resource is available. In case that the variation amount of the measured value of the downlink transmission corresponding to the uplink transmission resource with respect to the reference value is greater than the set threshold, it is determined that the uplink transmission resource is unavailable.

In an embodiment of the present disclosure, in case that the uplink transmission resource is available, the uplink transmission resource may be taken as the dedicated uplink transmission resource of the UE.

It is to be noted that when the variation amount between the measured value and the reference value is the absolute variation amount, the set threshold is a fixed value. When the variation amount is the relative variation amount, a value of the set threshold is related to a subtrahend and a minuend. For example, when the variation amount is a value of the measured value minus the reference value, the set threshold may be threshold 1. When the variation amount is a value of the reference value minus the measured value, the set threshold may be threshold 2. Values of the threshold 1 and the threshold 2 may be the same or different, which is not limited in the present disclosure.

In another possible implementation of the embodiment of the present disclosure, when the availability determining condition includes the transmission type of the uplink transmission matching the set type, the UE may determine whether the transmission type of the uplink transmission to be sent currently matches the set type corresponding to the uplink transmission resource. In case that the transmission type of the uplink transmission matches the set type corresponding to the uplink transmission resource, it may be determined that the uplink transmission resource is available. In case that the transmission type of the uplink transmission does not match the set type corresponding to the uplink transmission resource, it may be determined that the uplink transmission resource is unavailable.

In an embodiment of the present disclosure, in case that the uplink transmission resource is available, the uplink transmission resource may be taken as the dedicated uplink transmission resource of the UE.

It is to be noted that when the uplink transmission resource is not configured with the set type, the transmission type of the uplink transmission may be determined, which matches the set type of the uplink transmission resource. That is, in the embodiment of the present disclosure, it is possible to determine the uplink transmission resource which is not configured with the set type, and an uplink transmission resource which is configured with the set type matching the transmission type of the uplink transmission. A determined uplink transmission resource is taken as the dedicated uplink transmission resource of the UE.

In yet another possible implementation of the embodiment of the present disclosure, when the availability determination condition simultaneously includes the variation amount of the measured value of the downlink transmission corresponding to the uplink transmission resource with respect to the reference value being less than or equal to the set threshold, and the transmission type of the uplink transmission matching the set type, the UE may determine whether the variation amount of the measured value of the downlink transmission corresponding to the uplink transmission resource with respect to the reference value is less than or equal to the set threshold, and determine whether the transmission type of the uplink transmission to be sent currently matches the set type corresponding to the uplink transmission resource. In case that the variation amount of the measured value of the downlink transmission corresponding to the uplink transmission resource with respect to the reference value is less than or equal to the set threshold, and the transmission type of the uplink transmission matches the set type corresponding to the uplink transmission resource, it is determined that the uplink transmission resource is available. In case that the variation amount of the measured value of the downlink transmission corresponding to the uplink transmission resource with respect to the reference value is greater than the set threshold, and/or the transmission type of the uplink transmission does not match the set type corresponding to the uplink transmission resource, it is determined that the uplink transmission resource is unavailable.

In the embodiment of the present disclosure, in case that the uplink transmission resource is available, the uplink transmission resource may be taken as the dedicated uplink transmission resource of the UE.

Optionally, it may be first determined whether the set type configured for the uplink transmission resource matches the transmission type of the uplink transmission to be sent currently. In case that the set type configured for the uplink transmission resource matches the transmission type of the uplink transmission to be sent currently, it may be further determined whether the variation amount of the measured value of the downlink transmission corresponding to the uplink transmission resource with respect to the reference value is greater than the set threshold. When the variation amount is less than or equal to the set threshold, it is determined that the uplink transmission resource is available. At this time, the uplink transmission resource may be taken as the dedicated uplink transmission resource of the UE.

Optionally, it may be first determined whether the variation amount of the measured value of the downlink transmission corresponding to the uplink transmission resource with respect to the reference value is greater than the set threshold. When the variation amount is less than or equal to the set threshold, it may be further determined whether the set type configured for the uplink transmission resource matches the transmission type of the uplink transmission to be sent currently. In case that the set type configured for the uplink transmission resource matches the transmission type of the uplink transmission to be sent currently, it may be determined that the uplink transmission resource is available. At this time, the uplink transmission resource may be taken as the dedicated uplink transmission resource of the UE.

It is to be noted that when the uplink transmission resource is not configured with the set type, the transmission type of the uplink transmission may be determined, which matches the set type of the uplink transmission resource.

In step 403, in case that the uplink transmission resource is available, a target resource available in the uplink transmission resource is adopted for the uplink transmission.

In a possible implementation of the embodiment of the present disclosure, when the availability determination condition includes the variation amount of the measured value of the downlink transmission corresponding to the uplink transmission resource with respect to the reference value being less than or equal to the set threshold, the target resource is an uplink transmission resource in which the variation amount of the measured value with respect to the reference value is less than the set threshold in the plurality of sets of uplink transmission resources.

In another possible implementation of the embodiment of the present disclosure, when the availability determination condition includes the transmission type of the uplink transmission matching the set type, the target resource is an uplink transmission resource in which the corresponding set type matches the transmission type of the uplink transmission in the plurality of sets of uplink transmission resources.

In yet another possible implementation of the embodiment of the present disclosure, when the availability determination condition simultaneously includes the variation amount of the measured value of the downlink transmission corresponding to the uplink transmission resource with respect to the reference value being less than or equal to the set threshold, and the transmission type of the uplink transmission matching the set type, the target resource is an uplink transmission resource in which the corresponding set type matches the transmission type of the uplink transmission and the variation amount is less than the set threshold in the plurality of sets of uplink transmission resources.

In an embodiment of the present disclosure, in case that the uplink transmission resource is available, the target resource available in the plurality of sets of uplink transmission resources may be adopted for the uplink transmission, so as to improve the reliability of data transmission.

For example, the network device configures the UE with A sets of uplink transmission resources, and B sets of uplink transmission resources in the A sets of uplink transmission resources are specified for the transmission of uplink information X. When uplink information the UE intends to send is X, according to a transmission type of X, it may be determined that transmission types of the B sets of uplink transmission resources in the A sets of uplink transmission resources match the transmission type of X, and the UE may further determine whether determined B sets of uplink transmission resources may be used for the transmission of the uplink information X. If uplink transmission resources corresponding to C sets of configurations in B sets of configurations are unavailable, the UE may use uplink transmission resources corresponding to configurations other than the C sets of configurations in the B sets of configurations to transmit the uplink information X.

It is to be noted that when the target resource is an uplink transmission resource in which the corresponding set type matches the transmission type of uplink transmission in the plurality of sets of uplink transmission resources, or when the target resource is an uplink transmission resource in which the corresponding set type matches the transmission type of the uplink transmission and the variation amount is less than the set threshold in a plurality of sets of uplink transmission resources, the target resource whose set type matches the transmission type of the uplink transmission is adopt for the uplink transmission. Compared with the prior art where one set of uplink transmission resource is adopted to send uplink transmissions of different transmission types, the delay of data transmission may be reduced.

In a possible implementation of the embodiment of the present disclosure, the uplink transmission resource may also be configured with a set measurement signal. After the network device configures the set measurement signal for the uplink transmission resource, in case that the UE determines that the uplink transmission resource is available, the set measurement signal configured in the uplink transmission resource may be adopted to perform cell selection or reselection. For example, the UE no longer adopts the measurement signal for cell selection or reselection configured in system information for measurement, but adopts the set measurement signal configured in the uplink transmission resource for measurement of cell selection or reselection.

In case that it is determined that the uplink transmission resource is unavailable, the UE may stop adopting the set measurement signal configured in the uplink transmission resource for measurement. For example, the set measurement signal configured in the uplink transmission resource may be deleted.

In the method for determining the uplink transmission resource in the embodiment of the present disclosure, the availability determination condition and the uplink transmission resource are acquired by the UE. The availability of the uplink transmission resource for the uplink transmission is determined according to the availability determination condition. In case that the uplink transmission resource is available, the target resource available in the uplink transmission resource is adopted to perform uplink transmission. Therefore, on the basis of reducing network overheads, the reliability of data transmission may also be improved.

An embodiment of the present disclosure provides another method for determining an uplink transmission resource. FIG. 6 is a flow chart showing another method for determining an uplink transmission resource provided in an embodiment of the present disclosure. The method is performed by a user equipment (UE), so that the UE determines a dedicated uplink transmission resource corresponding to the UE.

The network device may be a base station, and the base station may include a plurality of cells providing services for the UE. Depending on different specific applications, the base station may also be referred to as an access point, or may be a device in an access network that communicates with a wireless terminal device through one or more sectors over an air interface, or other names.

As shown in FIG. 6, the method for determining the uplink transmission resource may include following steps.

In step 501, an availability determination condition and an uplink transmission resource are acquired, in which the uplink transmission resource includes uplink timing, and the availability determination condition includes a timer corresponding to the uplink timing being in a running state.

Optionally, the uplink transmission resource may be configured by a network device, or stipulated with a protocol. The uplink transmission resource may include the uplink timing.

For example, taking the uplink transmission resource configured by the network device as an example, the network device may configure corresponding uplink timing for the uplink transmission resource of the UE, for example, configure an uplink timing advance (TA). The network device may configure a timer for determining whether the uplink timing is available for the UE. For example, the network device may configure a time alignment timer (TAT) for the UE to determine whether the TA is available. The UE may start or restart the timer after receiving a timing advance command (TAC) sent by the network device.

In an embodiment of the present disclosure, the availability determination condition is configured to determine the availability of the uplink transmission resource for an uplink transmission. The availability determination condition may include the timer corresponding to the uplink timing being in the running state. The uplink transmission may be signaling, data, a mixed signaling/data transmission, or a reference signal.

Optionally, the availability determination condition may be configured by the network device, and the UE may acquire the availability determination condition from the network device. Optionally, the availability determination condition may be stipulated with a protocol and pre-configured by the UE, so that the UE may acquire the availability determination condition.

In the embodiment of the present disclosure, the network device may configure the uplink transmission resource for the UE and send a configured uplink transmission resource to the UE. Accordingly, the UE may acquire the above-mentioned uplink transmission resource. Optionally, the uplink transmission resource may be stipulated with a protocol and pre-configured by the UE, so that the UE may acquire the uplink transmission resource.

In step 502, the availability of the uplink transmission resource for the uplink transmission is determined according to the availability determination condition.

In an embodiment of the present disclosure, the UE may determine whether the timer corresponding to the uplink timing in the uplink transmission resource is in the running state. When the timer corresponding to the uplink timing is not in the running state, it may be determined that the uplink transmission resource is unavailable (or the uplink timing of the uplink transmission resource is unavailable). When the timer corresponding to the uplink timing is in the running state, it may be determined that the uplink transmission resource is available.

Further, the UE may also simultaneously determine whether the timer corresponding to the uplink timing has timed out and whether the timer corresponding to the uplink timing is in the running state. In case that the timer corresponding to the uplink timing has timed out or is not in the running state, it is determined that the uplink transmission resource is unavailable (or the uplink timing of the uplink transmission resource is unavailable). In case that the timer corresponding to the uplink timing has not timed out and is in the running state, it is determined that the uplink transmission resource is available.

Optionally, when the uplink timing of the uplink transmission resource is unavailable, such as in an uplink out-of-step state, it may be stipulated with a protocol that the uplink transmission resource is no longer available. For example, the uplink transmission resource may be released.

In step 503, in case that the uplink transmission resource is available, the uplink transmission resource is taken as a dedicated uplink transmission resource of the UE.

Optionally, in case that the UE determines that the uplink transmission resource is available, the uplink transmission resource may be taken as the dedicated uplink transmission resource of the UE, so that the UE may adopt the dedicated uplink transmission resource for the uplink transmission. In case that it is determined that the uplink transmission resource is unavailable, the UE may release the uplink transmission resource. For example, the UE may release the RRC configuration corresponding to the uplink transmission resource. Optionally, the UE may suspend the uplink transmission resource. For example, the UE may keep the RRC configuration corresponding to the uplink transmission resource, but suspend the uplink transmission resource. When the uplink transmission resource is in a suspended state, the UE does not use the uplink transmission resource for the uplink transmission. The uplink transmission may be signaling, data, a mixed signaling/data transmission, or a reference signal.

Further, in case that the UE determines that the uplink transmission resource is available, it may also determine whether the uplink transmission satisfies a sending condition corresponding to the uplink transmission resource, for example, determine whether a sent data volume corresponding to the uplink transmission is less than a data volume threshold configured by the network device. In case that the sent data volume is less than the data volume threshold configured by the network device, it is determined that the uplink transmission satisfies the sending condition corresponding to the uplink transmission resource. At this time, the uplink transmission resource may be adopted for the uplink transmission. For example, when the UE intends to send specific uplink data, the uplink data of a specific bearer may be carried in a PUSCH of the uplink transmission resource.

In the method for determining the uplink transmission resource in the embodiment of the present disclosure, the availability determination condition and the uplink transmission resource are acquired by the UE, in which the uplink transmission resource includes the uplink timing, and the availability determination condition includes the timer corresponding to the uplink timing being in the running state. The availability of the uplink transmission resource for the uplink transmission is determined according to the availability determination condition. In case that the uplink transmission resource is available, the uplink transmission resource is taken as the dedicated uplink transmission resource of the UE. Therefore, the UE may determine the availability of the uplink transmission resource by determining whether the timer corresponding to the uplink timing in the uplink transmission resource is in the running state, without sending an uplink signal to the network device and receiving a downlink signal sent by the network device to determine the availability of the uplink transmission resource, such that network overheads may be reduced.

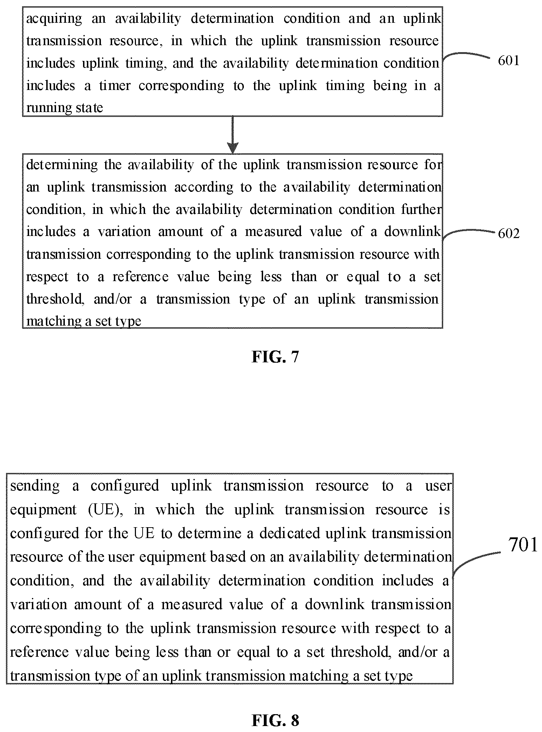

An embodiment of the present disclosure provides another method for determining an uplink transmission resource. FIG. 7 is a flow chart showing another method for determining an uplink transmission resource provided in an embodiment of the present disclosure. The method is performed by a user equipment (UE), so that the UE determines a dedicated uplink transmission resource corresponding to the UE.

The network device may be a base station, and the base station may include a plurality of cells providing services for the UE. Depending on different specific applications, the base station may also be referred to as an access point, or may be a device in an access network that communicates with a wireless terminal device through one or more sectors over an air interface, or other names.

As shown in FIG. 7, the method for determining the uplink transmission resource may include following steps.

In step 601, an availability determination condition and an uplink transmission resource are acquired, in which the uplink transmission resource includes uplink timing, and the availability determination condition includes a timer corresponding to the uplink timing being in a running state.

Optionally, the uplink transmission resource may be configured by a network device, or stipulated with a protocol. The uplink transmission resource may include the uplink timing.

For example, taking the uplink transmission resource configured by the network device as an example, the network device may configure corresponding uplink timing for the uplink transmission resource of the UE, for example, configure an uplink timing advance (TA). The network device may configure a timer for determining whether the uplink timing is available for the UE. For example, the network device may configure a time alignment timer (TAT) for the UE to determine whether the TA is available. The UE may start or restart the timer after receiving a timing advance command (TAC) sent by the network device.

In an embodiment of the present disclosure, the availability determination condition is configured to determine the availability of the uplink transmission resource for an uplink transmission. The availability determination condition may include the timer corresponding to the uplink timing being in the running state. The uplink transmission may be signaling, data, a mixed signaling/data transmission, or a reference signal.

Optionally, the availability determination condition may be configured by the network device, and the UE may acquire the availability determination condition from the network device. Optionally, the availability determination condition may be stipulated with a protocol and pre-configured by the UE, so that the UE may acquire the availability determination condition.

In the embodiment of the present disclosure, the network device may configure the uplink transmission resource for the UE and send a configured uplink transmission resource to the UE. Accordingly, the UE may acquire the above-mentioned uplink transmission resource. Optionally, the uplink transmission resource may be stipulated with a protocol and pre-configured by the UE, so that the UE may acquire the uplink transmission resource.

In step 602, the availability of the uplink transmission resource for an uplink transmission is determined according to the availability determination condition, in which the availability determination condition further includes a variation amount of a measured value of a downlink transmission corresponding to the uplink transmission resource with respect to a reference value being less than or equal to a set threshold, and/or a transmission type of an uplink transmission matching a set type.

In an embodiment of the present disclosure, the UE may first determine whether the timer corresponding to the uplink timing in the uplink transmission resource is in the running state. When the timer corresponding to the uplink timing is not in the running state, it is determined that the uplink transmission resource is unavailable. When the timer corresponding to the uplink timing is in the running state, it is further determined whether the variation amount of the measured value of the downlink transmission corresponding to the uplink transmission resource with respect to the reference value is less than or equal to a set threshold, and/or the transmission type of the uplink transmission matches the set type, so as to determine whether the uplink transmission resource is available according to a determining result.

Optionally, the UE may also simultaneously determine whether the timer corresponding to the uplink timing has timed out and whether the timer corresponding to the uplink timing is in the running state. In case that the timer corresponding to the uplink timing has timed out or is not in the running state, it is determined that the uplink transmission resource is unavailable. In case that the timer corresponding to the uplink timing has not timed out and is in the running state, it may be further determined whether the variation amount of the measured value of the downlink transmission corresponding to the uplink transmission resource with respect to the reference value is less than or equal to a set threshold, and/or whether the transmission type of the uplink transmission matches the set type, so as to determine whether the uplink transmission resource is available according to a determining result.

In a possible implementation of the embodiment of the present disclosure, when the availability determination condition includes the variation amount of the measured value of the downlink transmission corresponding to the uplink transmission resource with respect to the reference value being less than or equal to the set threshold, in case that the timer corresponding to the uplink timing in the uplink transmission resource is in the running state, the UE may measure the downlink transmission corresponding to the uplink transmission resource to determine the measured value of the downlink transmission corresponding to the uplink transmission resource, and calculate the variation amount between the measured value and the reference value. The variation amount may be a relative variation amount between the measured value and the reference value, or an absolute variation amount between the measured value and the reference value. After that, the UE may determine whether the variation amount of the measured value of the downlink transmission corresponding to the uplink transmission resource with respect to the reference value is less than or equal to the set threshold. In case that the variation amount of the measured value of the downlink transmission corresponding to the uplink transmission resource with respect to the reference value is less than or equal to the set threshold, it is determined that the uplink transmission resource is available. In case that the variation amount of the measured value of the downlink transmission corresponding to the uplink transmission resource with respect to the reference value is greater than the set threshold, it is determined that the uplink transmission resource is unavailable.

In the embodiment of the present disclosure, in case that the uplink transmission resource is available, the uplink transmission resource may be taken as the dedicated uplink transmission resource of the UE.

It is to be noted that when the variation amount between the measured value and the reference value is the absolute variation amount, the set threshold is a fixed value. When the variation amount is the relative variation amount, a value of the set threshold is related to a subtrahend and a minuend. For example, when the variation amount is a value of the measured value minus the reference value, the set threshold may be threshold 1. When the variation amount is a value of the reference value minus the measured value, the set threshold may be threshold 2. Values of the threshold 1 and the threshold 2 may be the same or different, which is not limited in the present disclosure.

In another possible implementation of the embodiment of the present disclosure, when the availability determination condition includes the transmission type of the uplink transmission matching the set type, in case that the timer corresponding to the uplink timing in the uplink transmission resource is in the running state, the UE may determine whether the transmission type of the uplink transmission to be sent currently matches the set type corresponding to the uplink transmission resource. In case that the transmission type of the uplink transmission matches the set type corresponding to the uplink transmission resource, it is determined that the uplink transmission resource is available. In case that the transmission type of the uplink transmission does not match the set type corresponding to the uplink transmission resource, it is determined that the uplink transmission resource is unavailable.

In the embodiment of the present disclosure, when the uplink transmission resource is available, the uplink transmission resource may be taken as the dedicated uplink transmission resource of the UE.

It is to be noted that when the uplink transmission resource is not configured with the set type, the transmission type of the uplink transmission may be determined, which matches the set type of the uplink transmission resource. That is, in the embodiment of the present disclosure, it is possible to determine the uplink transmission resource which is not configured with the set type, and an uplink transmission resource which is configured with the set type matching the transmission type of the uplink transmission. A determined uplink transmission resource is taken as the dedicated uplink transmission resource of the UE.

In yet another possible implementation of the embodiment of the present disclosure, when the availability determination condition simultaneously includes the variation amount of the measured value of the downlink transmission corresponding to the uplink transmission resource with respect to the reference value being less than or equal to the set threshold, and the transmission type of the uplink transmission matching the set type, in case that the timer corresponding to the uplink timing in the uplink transmission resource is in the running state, the UE may determine whether the variation amount of the measured value of the downlink transmission corresponding to the uplink transmission resource with respect to the reference value is less than or equal to the set threshold, and determine whether the transmission type of the uplink transmission to be sent currently matches the set type corresponding to the uplink transmission resource. In case that the variation amount of the measured value of the downlink transmission corresponding to the uplink transmission resource with respect to the reference value is less than or equal to the set threshold, and the transmission type of the uplink transmission matches the set type corresponding to the uplink transmission resource, it is determined that the uplink transmission resource is available. In case that the variation amount of the measured value of the downlink transmission corresponding to the uplink transmission resource with respect to the reference value is greater than the set threshold, and/or the transmission type of the uplink transmission does not match the set type corresponding to the uplink transmission resource, it is determined that the uplink transmission resource is unavailable.

In the embodiment of the present disclosure, in case that the uplink transmission resource is available, the uplink transmission resource may be taken as the dedicated uplink transmission resource of the UE.

Optionally, it may be first determined whether the set type configured for the uplink transmission resource matches the transmission type of the uplink transmission to be sent currently. In case that the set type configured for the uplink transmission resource matches the transmission type of the uplink transmission to be sent currently, it may be further determined whether the variation amount of the measured value of the downlink transmission corresponding to the uplink transmission resource with respect to the reference value is greater than the set threshold. When the variation amount is less than or equal to the set threshold, it is determined that the uplink transmission resource is available. At this time, the uplink transmission resource may be taken as the dedicated uplink transmission resource of the UE.

Optionally, it may be first determined whether the variation amount of the measured value of the downlink transmission corresponding to the uplink transmission resource with respect to the reference value is greater than the set threshold. When the variation amount is less than or equal to the set threshold, it may be further determined whether the set type configured for the uplink transmission resource matches the transmission type of the uplink transmission to be sent currently. In case that the set type configured for the uplink transmission resource matches the transmission type of the uplink transmission to be sent currently, it may be determined that the uplink transmission resource is available. At this time, the uplink transmission resource may be taken as the dedicated uplink transmission resource of the UE.

It is to be noted that when the uplink transmission resource is not configured with the set type, the transmission type of the uplink transmission may be determined, which matches the set type of the uplink transmission resource.

Optionally, in case that it is determined that the uplink transmission resource is available, the UE may adopt the uplink transmission resource for the uplink transmission. In case that it is determined that the uplink transmission resource is unavailable, the UE may release the uplink transmission resource. For example, the UE may release the RRC configuration corresponding to the uplink transmission resource. Optionally, the UE may suspend the uplink transmission resource. For example, the UE may keep the RRC configuration corresponding to the uplink transmission resource, but suspend the uplink transmission resource. When the uplink transmission resource is in a suspended state, the UE does not use the uplink transmission resource for the uplink transmission.

Further, in case that the UE determines that the uplink transmission resource is available, it may also determine whether the uplink transmission satisfies a sending condition corresponding to the uplink transmission resource, for example, determine whether a sent data volume corresponding to the uplink transmission is less than a data volume threshold configured by the network device. In case that the sent data volume is less than the data volume threshold configured by the network device, it is determined that the uplink transmission satisfies the sending condition corresponding to the uplink transmission resource. At this time, the UE may adopt the uplink transmission resource for the uplink transmission. For example, when the UE intends to send specific uplink data, the uplink data of a specific bearer may be carried in a PUSCH of the uplink transmission resource.

In a possible implementation of the embodiment of the present disclosure, the uplink transmission resource may also be configured with a set measurement signal. After the network device configures the set measurement signal for the uplink transmission resource, in case that the UE determines that the uplink transmission resource is available, the set measurement signal configured in the uplink transmission resource may be adopted to perform cell selection or reselection. For example, the UE no longer adopts the measurement signal for cell selection or reselection configured in system information for measurement, but adopts the set measurement signal configured in the uplink transmission resource for measurement of cell selection or reselection.

In case that the UE determines that the uplink transmission resource is unavailable, the UE may stop adopting the set measurement signal configured in the uplink transmission resource for measurement. For example, the set measurement signal configured in the uplink transmission resource may be deleted.

In the method for determining the uplink transmission resource in the embodiment of the present disclosure, the UE may determine the availability of the uplink transmission resource by determining whether the timer corresponding to the uplink timing in the uplink transmission resource is in the running state, and by measuring the downlink transmission corresponding to the uplink transmission resource, and/or determining whether the transmission type of the uplink transmission to be sent matches the set type corresponding to the uplink transmission resource, without sending an uplink signal to the network device and receiving a downlink signal sent by the network device to determine the availability of the uplink transmission resource, such that network overheads may be reduced.

An embodiment of the present disclosure provides another method for determining an uplink transmission resource. FIG. 8 is a flow chart showing another method for determining an uplink transmission resource provided in an embodiment of the present disclosure. The method is performed by a network device to configure the uplink transmission resource for the UE.

The network device may be a base station, and the base station may include a plurality of cells providing services for the UE. Depending on different specific applications, the base station may also be referred to as an access point, or may be a device in an access network that communicates with a wireless terminal device through one or more sectors over an air interface, or other names.

As shown in FIG. 8, the method for determining the uplink transmission resource may include the following step.

In step 701, a configured uplink transmission resource is sent to a user equipment (UE), in which the uplink transmission resource is configured for the UE to determine a dedicated uplink transmission resource of the user equipment based on an availability determination condition. The availability determination condition includes a variation amount of a measured value of a downlink transmission corresponding to the uplink transmission resource with respect to a reference value being less than or equal to a set threshold; and/or a transmission type of an uplink transmission matching a set type.

In a possible implementation of the embodiment of the present disclosure, the network device may configure the uplink transmission resource for the UE and send a configured uplink transmission resource to the UE. Accordingly, the UE may acquire the above-mentioned uplink transmission resource and determine the availability of the uplink transmission resource according to the availability determination condition. In case that the uplink transmission resource is available, the uplink transmission resource may be taken as the dedicated uplink transmission resource of the UE.

In a possible implementation of the embodiment of the present disclosure, the uplink transmission resource may also be stipulated with a protocol and pre-configured by the UE, so that the UE may acquire the uplink transmission resource, and determine the availability of the uplink transmission resource according to the availability determination condition. In case that the uplink transmission resource is available, the uplink transmission resource is taken as the dedicated uplink transmission resource of the UE.

The uplink transmission may be signaling, data, a mixed signaling/data transmission, or a reference signal. The downlink transmission may be signaling, data, a mixed signaling/data transmission, or a reference signal.

The availability determination condition may be configured by the network device, and the UE may acquire the availability determination condition from the network device. Optionally, the availability determination condition may be stipulated with a protocol and pre-configured by the UE, so that the UE may acquire the availability determination condition.

The set threshold may be configured by the network device, or stipulated with a protocol and pre-configured by the UE.

The set type may be a transmission type configured for the uplink transmission resource.

In an embodiment of the present disclosure, the UE may determine the availability of the uplink transmission corresponding to the uplink transmission resource according to the availability determination condition. Specifically, the UE may determine the availability of the uplink transmission resource for the uplink transmission according to the measured value of downlink transmission corresponding to the uplink transmission resource or the transmission type of the uplink transmission. Moreover, the UE may also determine the availability of the uplink transmission resource for the uplink transmission according to the above-mentioned measured value and the transmission type of the uplink transmission. Several possible implementations are described respectively below.

In a possible implementation of the embodiment of the present disclosure, when the availability determination condition includes the variation amount of the measured value of the downlink transmission corresponding to the uplink transmission resource with respect to the reference value being less than or equal to the set threshold, the UE may measure the downlink transmission corresponding to the uplink transmission resource to determine the measured value of the downlink transmission corresponding to the uplink transmission resource, and calculate the variation amount between the measured value and the reference value. The variation amount may be a relative variation amount between the measured value and the reference value, or an absolute variation amount between the measured value and the reference value. After that, the UE may determine whether the variation amount of the measured value of the downlink transmission corresponding to the uplink transmission resource with respect to the reference value is less than or equal to a set threshold. In case that the variation amount of the measured value of the downlink transmission corresponding to the uplink transmission resource with respect to the reference value is less than or equal to the set threshold, it is determined that the uplink transmission resource is available. In case that the variation amount of the measured value of the downlink transmission corresponding to the uplink transmission resource with respect to the reference value is greater than the set threshold, it is determined that the uplink transmission resource is unavailable.

In the embodiment of the present disclosure, in case that the uplink transmission resource is available, the uplink transmission resource may be taken as the dedicated uplink transmission resource of the UE.

It is to be noted that when the variation amount between the measured value and the reference value is the absolute variation amount, the set threshold is a fixed value. When the variation amount is the relative variation amount, a value of the set threshold is related to a subtrahend and a minuend. For example, when the variation amount is a value of the measured value minus the reference value, the set threshold may be threshold 1. When the variation amount is a value of the reference value minus the measured value, the set threshold may be threshold 2. Values of the threshold 1 and the threshold 2 may be the same or different, which is not limited in the present disclosure.

In another possible implementation of the embodiment of the present disclosure, when the availability determination condition includes the transmission type of the uplink transmission matching the set type, the UE may determine whether the transmission type of the uplink transmission to be sent currently matches the set type corresponding to the uplink transmission resource. In case that the transmission type of the uplink transmission matches the set type corresponding to the uplink transmission resource, it is determined that the uplink transmission resource is available. In case that the transmission type of the uplink transmission does not match the set type corresponding to the uplink transmission resource, it is determined that the uplink transmission resource is unavailable.

In the embodiment of the present disclosure, in case that the uplink transmission resource is available, the uplink transmission resource may be taken as the dedicated uplink transmission resource of the UE.

It is to be noted that when the uplink transmission resource is not configured with the set type, the transmission type of the uplink transmission may be determined, which matches the set type of the uplink transmission resource. That is, in the embodiment of the present disclosure, it is possible to determine the uplink transmission resource which is not configured with the set type, and an uplink transmission resource which is configured with the set type matching the transmission type of the uplink transmission. A determined uplink transmission resource is taken as the dedicated uplink transmission resource of the UE.

In yet another possible implementation of the embodiment of the present disclosure, when the availability determination condition simultaneously includes the variation amount of the measured value of the downlink transmission corresponding to the uplink transmission resource with respect to the reference value being less than or equal to the set threshold, and the transmission type of the uplink transmission matching the set type, the UE may determine whether the variation amount of the measured value of the downlink transmission corresponding to the uplink transmission resource with respect to the reference value is less than or equal to the set threshold, and determine whether the transmission type of the uplink transmission to be sent currently matches the set type corresponding to the uplink transmission resource. In case that the variation amount of the measured value of the downlink transmission corresponding to the uplink transmission resource with respect to the reference value is less than or equal to the set threshold, and the transmission type of the uplink transmission matches the set type corresponding to the uplink transmission resource, it is determined that the uplink transmission resource is available. In case that the variation amount of the measured value of the downlink transmission corresponding to the uplink transmission resource with respect to the reference value is greater than the set threshold, and/or the transmission type of the uplink transmission does not match the set type corresponding to the uplink transmission resource, it is determined that the uplink transmission resource is unavailable.

**In** the embodiment of the present disclosure, in case that the uplink transmission resource is available, the uplink transmission resource may be taken as the dedicated uplink transmission resource of the UE.

Optionally, it may be first determined whether the set type configured for the uplink transmission resource matches the transmission type of the uplink transmission to be sent currently. In case that the set type configured for the uplink transmission resource matches the transmission type of the uplink transmission to be sent currently, it may be further determined whether the variation amount of the measured value of the downlink transmission corresponding to the uplink transmission resource with respect to the reference value is greater than the set threshold. When the variation amount is less than or equal to the set threshold, it is determined that the uplink transmission resource is available. At this time, the uplink transmission resource may be taken as the dedicated uplink transmission resource of the UE.

Optionally, it may be first determined whether the variation amount of the measured value of the downlink transmission corresponding to the uplink transmission resource with respect to the reference value is greater than the set threshold. When the variation amount is less than or equal to the set threshold, it may be further determined whether the set type configured for the uplink transmission resource matches the transmission type of the uplink transmission to be sent currently. In case that the set type configured for the uplink transmission resource matches the transmission type of the uplink transmission to be sent currently, it may be determined that the uplink transmission resource is available. At this time, the uplink transmission resource may be taken as the dedicated uplink transmission resource of the UE.

It is to be noted that when the uplink transmission resource is not configured with the set type, the transmission type of the uplink transmission may be determined, which matches the set type of the uplink transmission resource.

Therefore, the UE may determine the availability of the uplink transmission resource merely by measuring the downlink transmission corresponding to the uplink transmission resource, and/or by determining whether the transmission type of the uplink transmission to be sent matches the set type corresponding to the uplink transmission resource. In case that the uplink transmission resource is available, the uplink transmission resource is taken as the dedicated uplink transmission resource of the UE. Thus, the UE does not need to send an uplink signal to the network device and receive a downlink signal sent by the network device, such that network overheads may be reduced.

Optionally, in case that the UE determines that the uplink transmission resource is available, the UE may take the uplink transmission resource as the dedicated uplink transmission resource of the UE, so that the UE may adopt the dedicated uplink transmission resource for the uplink transmission. In case that it is determined that the uplink transmission resource is unavailable, the UE may release the uplink transmission resource. For example, the UE may release the RRC configuration corresponding to the uplink transmission resource. Optionally, the UE may suspend the uplink transmission resource. For example, the UE may keep the RRC configuration corresponding to the uplink transmission resource, but suspend the uplink transmission resource. When the uplink transmission resource is in a suspended state, the UE does not use the uplink transmission resource for the uplink transmission.

Further, in case that the UE determines that the uplink transmission resource is available, it may also determine whether the uplink transmission satisfies a sending condition corresponding to the uplink transmission resource, for example, determine whether a sent data volume corresponding to the uplink transmission is less than a data volume threshold configured by the network device. In case that the sent data volume is less than the data volume threshold configured by the network device, it is determined that the uplink transmission satisfies the sending condition corresponding to the uplink transmission resource. At this time, the UE may adopt the uplink transmission resource for the uplink transmission. For example, when the UE intends to send specific uplink data, the uplink data of a specific bearer may be carried in a PUSCH of the uplink transmission resource.

In the method for determining the uplink transmission resource in the embodiment of the present disclosure, the configured uplink transmission resource is sent to the UE by the network device. Accordingly, the UE determines the dedicated uplink transmission resource of the UE based on the availability determination condition after receiving the uplink transmission resource, in which the availability determination condition includes the variation amount of the measured value of the downlink transmission corresponding to the uplink transmission resource with respect to the reference value being less than or equal to the set threshold; and/or the transmission type of the uplink transmission matching the set type. Thus, the UE may determine the availability of the uplink transmission resource merely by measuring the downlink transmission corresponding to the uplink transmission resource, and/or by determining whether the transmission type of the uplink transmission to be sent matches the set type corresponding to the uplink transmission resource. In case that the uplink transmission resource is available, the uplink transmission resource is taken as the dedicated uplink transmission resource of the UE. Thus, the UE does not need to send an uplink signal to the network device and receive a downlink signal sent by the network device to determine the availability of the uplink transmission resource, such that network overheads may be reduced.

Corresponding to the methods for determining the uplink transmission resource provided in the above-mentioned embodiments of FIGS. 2 to 7, the present disclosure also provides an apparatus for determining an uplink transmission resource. The apparatus for determining the uplink transmission resource provided in the embodiment of the present disclosure corresponds to the methods for determining the uplink transmission resource provided in the above-mentioned embodiments of FIGS. 2 to 7. Therefore, the implementation of the methods for determining the uplink transmission resource is also applicable to the apparatus for determining the uplink transmission resource provided in the embodiment, which will not be elaborated herein.

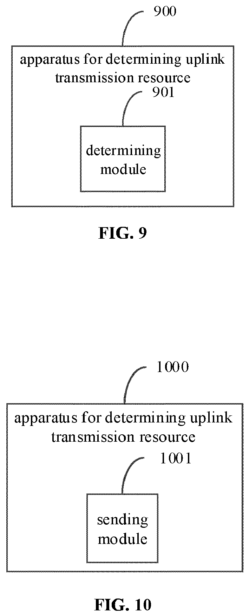

FIG. 9 is a schematic diagram showing an apparatus for determining an uplink transmission resource provided in an embodiment of the present disclosure. The apparatus is performed by a user equipment (UE).

As shown in FIG. 9, the apparatus 900 for determining the uplink transmission resource may include a determining module 901.

The determining module 901 is configured to determine a dedicated uplink transmission resource of the UE based on an availability determination condition.

The availability determination condition includes a variation amount of a measured value of a downlink transmission corresponding to the uplink transmission resource with respect to a reference value being less than or equal to a set threshold, and/or a transmission type of an uplink transmission matching a set type.

In some embodiments of the present disclosure, the apparatus 900 for determining the uplink transmission resource may further include a releasing module.

The releasing module is configured to release or suspend the uplink transmission resource in case that the uplink transmission resource is unavailable.

In some embodiments of the present disclosure, the uplink transmission resource includes uplink timing. The availability determination condition further includes a timer corresponding to the uplink timing being in a running state.

In some embodiments of the present disclosure, the uplink transmission resource is configured for an uplink transmission in an idle state or an inactive state.

In some embodiments of the present disclosure, the reference value is obtained by measuring the downlink transmission for the last time from the time when the network device configures the uplink transmission resource or releases a connection with the UE, before or when the network device configures the uplink transmission resource or releases the connection with the user equipment; or the reference value is obtained by measuring the downlink transmission when or before the user equipment receives an uplink timing adjustment command corresponding to the uplink transmission resource for the last time. In some embodiments of the present disclosure, a set measuring object for measurement includes at least one of a set cell, a set beam, or a set measurement signal.

In some embodiments of the present disclosure, a set measurement item for measurement includes one or a combination of ones of a reference signal received power (RSRP), a reference signal received quality (RSRQ), a signal to interference and noise ratio (SINR), and a pathloss.

In some embodiments of the present disclosure, the measured value and/or the reference value are obtained by measuring a set measurement signal, in which the set measurement signal is a measurement signal determined according to configuration information of the network device and configured for cell selection or reselection, or dedicated to obtaining the measured value and/or the reference value.

In some embodiments of the present disclosure, the configuration information includes one or a combination of ones of frequency indication information, a sub carrier spacing, a measurement time interval, reference signal configuration, a beam measurement threshold, a maximum number of beams, a beam identifier, and a signal identifier.

In some embodiments of the present disclosure, the set measurement signal is configured in the uplink transmission resource.

The apparatus 900 for determining the uplink transmission resource may further include a processing module is configured to adopt the set measurement signal configured in the uplink transmission resource to perform cell selection or reselection in case that it is determined that the uplink transmission resource is available, and/or stop adopting the set measurement signal configured in the uplink transmission resource to perform measurement in case that it is determined that the uplink transmission resource is unavailable.

In some embodiments of the present disclosure, a measurement result of the set cell include an average measurement result of beams whose measured values are greater than a beam measurement threshold in the set cell, and/or a maximum measurement result in beams of the set cell.

In some embodiments of the present disclosure, the set beam includes any one or more of a beam with a largest measured value in the set cell, a beam corresponding to the uplink transmission resource, a beam indicated by the network device, a beam with a measured value greater than or equal to a beam measurement threshold, and a beam with a measured value less than or equal to a beam measurement threshold.

In some embodiments of the present disclosure, an identifier representing the transmission type includes one or a combination of ones of a bearer identifier, a bearer type identifier, a data flow identifier, a session identifier, a logic channel identifier, and a cell group identifier corresponding to a service, and an uplink transmission resource type.

In some embodiments of the present disclosure, the uplink transmission resource type includes one or a combination of ones of an uplink transmission on a physical uplink shared channel (PUSCH), an uplink transmission on a physical uplink control channel (PUCCH), and an uplink sounding signal.

In some embodiments of the present disclosure, uplink grant is taken as the uplink transmission resource for the uplink transmission on the PUSCH.

In some embodiments of the present disclosure, the uplink transmission resource has corresponding frequency indication information, in which the frequency indication information is configured by the network device or pre-configured by the user equipment, and the frequency indication information includes one or a combination of ones of a cell identifier, a frequency point identifier, a bandwidth, a bandwidth part identifier, a cell group identifier, and a timing advance group identifier.

In the apparatus for determining the uplink transmission resource in the embodiment of the present disclosure, the dedicated uplink transmission resource of the user equipment is determined by the UE based on the availability determination condition, in which the availability determination condition includes the variation amount of the measured value of the downlink transmission corresponding to the uplink transmission resource with respect to the reference value being less than or equal to the set threshold, and/or the transmission type of the uplink transmission matching the set type. Therefore, the UE may determine the availability of the uplink transmission resource merely by measuring the downlink transmission corresponding to the uplink transmission resource, and/or by determining whether the transmission type of the uplink transmission to be sent matches the set type corresponding to the uplink transmission resource. In case that the uplink transmission resource is available, the uplink transmission resource is taken as the dedicated uplink transmission resource of the UE. Thus, the UE does not need to send an uplink signal to the network device and receive a downlink signal sent by the network device to determine the availability of the uplink transmission resource, such that network overheads may be reduced.

Corresponding to the method for determining the uplink transmission resource provided in the embodiment of FIG. 8, the present disclosure also provides an apparatus for determining an uplink transmission resource. The apparatus for determining the uplink transmission resource provided in the embodiment of the present disclosure corresponds to the method for determining the uplink transmission resource provided in the above-mentioned embodiment of FIG. 8. Therefore, the implementation of the method for determining the uplink transmission resource provided in the embodiment of FIG. 8 is also applicable to the apparatus for determining the uplink transmission resource provided in the embodiment, which will not be elaborated herein.

FIG. 10 is a schematic diagram showing another apparatus for determining an uplink transmission resource provided in an embodiment of the present disclosure. The apparatus is performed by a network device.

As shown in FIG. 10, the apparatus 1000 for determining the uplink transmission resource may include a sending module 1001.

The sending module 1001 is configured to send a configured uplink transmission resource to a user equipment.

The uplink transmission resource is configured for the user equipment to determine a dedicated uplink transmission resource of the user equipment based on an availability determination condition. The availability determination condition includes a variation amount of a measured value of a downlink transmission corresponding to the uplink transmission resource with respect to a reference value being less than or equal to a set threshold, and/or a transmission type of an uplink transmission matching a set type.

In the apparatus for determining the uplink transmission resource in the embodiment of the present disclosure, the configured uplink transmission resource is sent to the UE by the network device. Accordingly, the UE determines the dedicated uplink transmission resources of the UE based on the availability determination condition after receiving the uplink transmission resource, in which the availability determination condition includes the variation amount of the measured value of the downlink transmission corresponding to the uplink transmission resource with respect to the reference value being less than or equal to the set threshold, and/or the transmission type of the uplink transmission matching the set type. Thus, the UE may determine the availability of the uplink transmission resource merely by measuring the downlink transmission corresponding to the uplink transmission resource, and/or by determining whether the transmission type of the uplink transmission to be sent matches the set type corresponding to the uplink transmission resource. In case that the uplink transmission resource is available, the uplink transmission resource is taken as the dedicated uplink transmission resource of the UE. Thus, the UE does not need to send an uplink signal to the network device and receive a downlink signal sent by the network device to determine the availability of the uplink transmission resource, such that network overheads may be reduced.

In order to realize the above-mentioned embodiments, the present disclosure also provides a communication device.

The communication device provided in an embodiment of the present disclosure includes a processor, a transceiver, a memory, and an executable program stored in the memory and capable of being run by the processor, in which the processor is configured to execute the method for determining the uplink transmission resource corresponding to any one of the above-mentioned embodiments of FIGS. 2 to 7, or the method for determining the uplink transmission resource corresponding to the above-mentioned embodiment of FIG. 8 when running the executable program.

The communication device may be the above-mentioned UE, or network device.

The processor may include various types of storage medium, which are non-transitory computer storage medium that may continue to memorize information stored thereon after the communication device is powered down. Here, the communication device includes a UE or a network device.

The processor may be connected to the memory through a bus or the like, for reading the executable program stored on the memory, for example, as shown in at least one of FIGS. 2 to 8.

In order to realize the above-mentioned embodiments, the present disclosure also provides a computer storage medium.

The computer storage medium provided in the embodiment of the present disclosure having stored therein executable programs that, when executed by a processor, cause the above-mentioned method for determining the uplink transmission resource, for example, as shown in at least one of FIGS. 2 to 8, to be implemented.

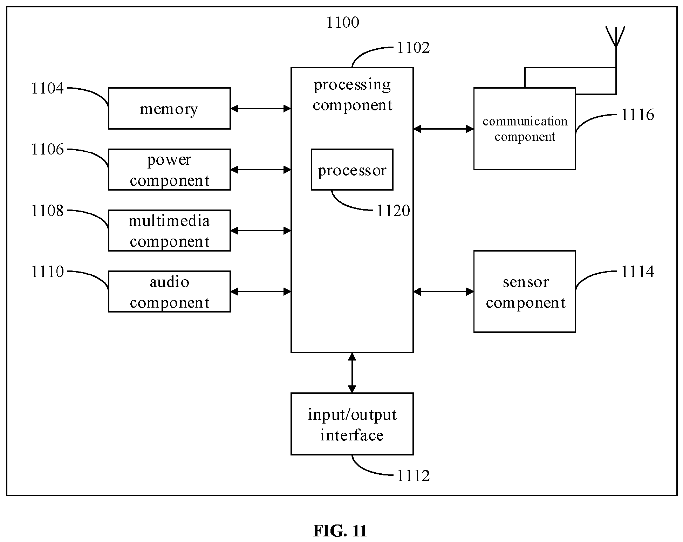

FIG. 11 is a block diagram of a user equipment (UE) provided in an embodiment of the present disclosure. For example, the UE 1100 can be a mobile phone, a computer, a digital broadcast user equipment, a messaging device, a game console, a tablet device, a medical device, a fitness device, a personal digital assistant, or the like.

Referring to FIG. 11, the UE 1100 may include at least of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the UE 1100, such as the operations associated with display, phone calls, data communications, camera operations, and recording operations. The processing component 1102 can include at least one processor 1120 to execute instructions to perform all or some of the steps in the above-described methods. Moreover, the processing component 1102 may include at least one module which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the UE 1100. Examples of such data include instructions for any applications or methods operated on the UE 1100, contact data, phonebook data, messages, pictures, videos, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the UE 1100. The power component 1106 may include a power management system, at least one power source, and any other components associated with the generation, management, and distribution of power in the UE 1100.

The multimedia component 1108 includes a screen providing an output interface between the UE 1100 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensor to sense touches, swipes, and gestures on the touch panel. The touch sensors may not only sense a boundary of a touch or swipe action, but also sense a wake up time and a pressure associated with the touch or swipe action. In some embodiments, the multimedia component 1108 includes a front camera and/or a rear camera. The front camera and/or the rear camera may receive an external multimedia datum while the user equipment 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone (MIC) configured to receive an external audio signal when the user equipment 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as keyboards, click wheels, buttons, and the like. The buttons may include, but are not limited to, a home button, a volume button, a starting button, and a locking button.

The sensor component 1114 includes at least one sensor to provide status assessments of various aspects of the UE 1100. For instance, the sensor component 1114 may detect an open/closed status of the UE 1100, relative positioning of components, e.g., the display and the keypad, of the UE 1100, a change in position of the UE 1100 or a component of the UE 1100, a presence or absence of user contact with the UE 1100, an orientation or an acceleration/deceleration of the UE 1100, and a change in temperature of the UE 1100. The sensor component 1114 may include a proximity sensor configured to detect the presence of nearby objects without any physical contact. The sensor component 1114 may further include a light sensor, such as a CMOS or CCD image sensor, for use in imaging applications. In some embodiments, the sensor component 1114 may further include an accelerometer sensor, a gyroscope sensor, a magnetic sensor, a pressure sensor, or a temperature sensor.

The communication component 1116 is configured to facilitate communication, wired or wireless, between the UE 1100 and other devices. The UE 1100 can access a wireless network based on a communication standard, such as WiFi, 2G, or 3G, or a combination thereof. In an illustrative embodiment, the communication component 1116 receives a broadcast signal or broadcast associated information from an external broadcast management system via a broadcast channel. In an illustrative embodiment, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1100 may be implemented with at least one application specific integrated circuit (ASIC), a digital signal processor (DSP), a digital signal processing device (DSPD), a programmable logic device (PLD), a field programmable gate array (FPGA), a controller, a micro-controller, a microprocessor, or other electronic elements, for performing any one of the methods in the above-mentioned FIGS. 2 to 7.

In an illustrative embodiment, there is also provided a non-transitory computer readable storage medium including instructions, such as included in the memory 1104, executable by the processor 1120 in the UE 1100, for completing any one of the methods in the above-mentioned FIGS. 2 to 7. For example, the non-transitory computer-readable storage medium may be a ROM, a random access memory (RAM), a CD-ROM, a magnetic tape, a floppy disc, an optical data storage device, and the like.

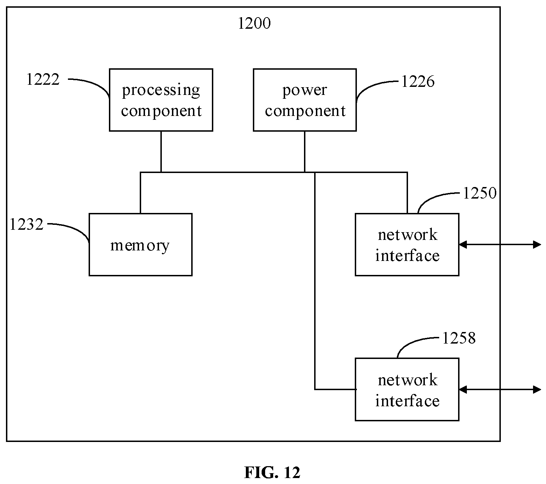

As shown in FIG. 12, FIG. 12 is a schematic diagram showing a network device provided in an embodiment of the present disclosure. For example, the network device 1200 may be provided as a network device. Referring to FIG. 12, the network device 1200 includes a processing component 1222, which further includes at least one processor, and memory resources represented by a memory 1232 for storing instructions executable by the processing component 1222, such as an application program. The application program stored in the memory 1232 may include one or more modules each corresponding to a set of instructions. In addition, the processing component 1222 is configured to execute instructions to perform any of the above-mentioned methods performed by the network device, for example, the method shown in FIG. 8.

The network device 1200 may further include a power component 1226 configured to perform power management of the network device 1200, a wired or wireless network interface 1250 configured to connect the network device 1200 to a network, and an input/output (I/O) interface 1258. The network device 1200 may operate based on an operating system stored in the memory 1232, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. The present disclosure is intended to cover any variations, uses, or adaptations of the disclosure following the general principles thereof and including such departures from the present disclosure as come within known or customary practice in the art. It is intended that the specification and examples be considered as illustrative only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for determining an uplink transmission resource, performed by a user equipment, comprising:
determining (101) a dedicated uplink transmission resource of the user equipment from a plurality of sets of uplink transmission resources based on an availability determination condition;
**characterized in that** the availability determination condition comprises:
a variation amount of a measured value obtained by measuring a downlink transmission corresponding to the uplink transmission resource in an idle state or an inactive state with respect to a reference value obtained by measuring the downlink transmission in a connected state being less than or equal to a set threshold; and
a transmission type of an uplink transmission matching a set type configured for the uplink transmission resource; wherein an identifier representing the transmission type comprises at least one or a combination of: a bearer identifier, a bearer type identifier, a data flow identifier, a session identifier, a logic channel identifier, a cell group identifier corresponding to a service, and an uplink transmission resource type.

2. The determination method of claim 1, further comprising:
releasing or suspending the uplink transmission resource in case that the uplink transmission resource is unavailable.

3. The determination method of claim 1, wherein the uplink transmission resource comprises uplink timing; and the availability determination condition further comprises:
a timer corresponding to the uplink timing being in a running state.

4. The determination method of claim 1, wherein the uplink transmission resource is configured for an uplink transmission in an idle state or an inactive state.

5. The determination method of claim 1, wherein
the reference value is obtained by measuring the downlink transmission before or when a network device configures the uplink transmission resource or releases a connection with the user equipment; and
the measured value is obtained by measuring the downlink transmission after the network device configures the uplink transmission resource or releases the connection with the user equipment.

6. The determination method of claim 5, wherein
a set measuring object for measurement comprises at least one of a set cell, a set beam, or a set measurement signal.

7. The determination method of claim 5, wherein a set measurement item for measurement comprises one or a combination of ones of a reference signal received power, RSRP, a reference signal received quality, RSRQ, a signal to interference and noise ratio, SINR, and a pathloss.

8. The determination method of claim 5, wherein the measured value and/or the reference value are obtained by measuring a set measurement signal;
wherein the set measurement signal is a measurement signal determined according to configuration information of the network device and configured for cell selection or reselection, or dedicated to obtaining the measured value and/or the reference value.

9. The determination method of claim 8, wherein
the configuration information comprises one or a combination of ones of frequency indication information, a sub carrier spacing, a measurement time interval, reference signal configuration, a beam measurement threshold, a maximum number of beams, a beam identifier, and a signal identifier.

10. The determination method of claim 8, wherein the set measurement signal is configured in the uplink transmission resource; and the method further comprises:
adopting the set measurement signal configured in the uplink transmission resource to perform cell selection or reselection in case that it is determined that the uplink transmission resource is available; and/or
stopping adopting the set measurement signal configured in the uplink transmission resource to perform measurement in case that it is determined that the uplink transmission resource is unavailable.

11. The determination method of claim 6, wherein a measurement result of the set cell comprises:
an average measurement result of beams whose measured values are greater than a beam measurement threshold in the set cell; and/or
a maximum measurement result in beams of the set cell.

12. The determination method of claim 6, wherein the set beam comprises any one or more of:
a beam with a largest measured value in the set cell;
a beam corresponding to the uplink transmission resource;
a beam indicated by the network device;
a beam with a measured value greater than or equal to a beam measurement threshold; and
a beam with a measured value less than or equal to a beam measurement threshold.

13. A method for determining an uplink transmission resource, performed by a network device, comprising:
sending (701) a plurality of sets of configured uplink transmission resources to a user equipment;
wherein the plurality of sets of uplink transmission resources are configured for the user equipment to determine a dedicated uplink transmission resource of the user equipment based on an availability determination condition;
**characterized in that** the availability determination condition comprises:
a variation amount of a measured value obtained by measuring a downlink transmission corresponding to the uplink transmission resource in an idle state or an inactive state with respect to a reference value obtained by measuring the downlink transmission in a connected state being less than or equal to a set threshold; and
a transmission type of an uplink transmission matching a set type configured for the uplink transmission resource; wherein an identifier representing the transmission type comprises at least one or a combination of: a bearer identifier, a bearer type identifier, a data flow identifier, a session identifier, a logic channel identifier, a cell group identifier corresponding to a service, and an uplink transmission resource type.

14. A communication device, comprising:
a transceiver;
a memory;
a processor connected to the transceiver and the memory, respectively, and configured to control wireless signal transmission and reception of the transceiver by executing computer-executable instructions on the memory, and capable of implementing the method of any one of claims 1 to 12 or 13.

15. A computer storage medium having stored therein computer-executable instructions that, when executed by a processor, cause the method of any one of claims 1 to 12 or 13 to be implemented.

## Patentansprüche

1. Verfahren zur Bestimmung einer Uplink-Übertragungsressource, das von einem Benutzerendgerät durchgeführt wird, umfassend:
Bestimmen (101) einer dedizierten Uplink-Übertragungsressource des Benutzerendgeräts aus einer Vielzahl von Sets von Uplink-Übertragungsressourcen basierend auf einer Verfügbarkeitsbestimmungsbedingung;
**dadurch gekennzeichnet, dass** die Verfügbarkeitsbestimmungsbedingung umfasst:
einen Abweichungsbetrag eines Messwerts, der durch Messen einer Downlink-Übertragung erhalten wird, entsprechend der Uplink-Übertragungsressource in einem Ruhezustand oder einem inaktiven Zustand in Bezug auf einen Referenzwert, der durch Messen der Downlink-Übertragung in einem verbundenen Zustand erhalten wird und kleiner als oder gleich einem festgelegten Schwellenwert ist; und
einen Übertragungstyp einer Uplink-Übertragung, der mit einem festgelegten Typ übereinstimmt, der für die Uplink-Übertragungsressource konfiguriert ist; wobei eine Kennung, die den Übertragungstyp darstellt, mindestens eines aus Folgendem oder eine Kombination aus Folgendem umfasst: eine Trägerkennung, eine Trägertypkennung, eine Datenflusskennung, eine Sitzungskennung, eine Logikkanalkennung, eine Zellgruppenkennung, die einem Dienst entspricht, und eine Uplink-Übertragungsressourcenkennung.

2. Verfahren zur Bestimmung nach Anspruch 1, das ferner umfasst:
Freigeben oder Aussetzen der Uplink-Übertragungsressource, wenn die Uplink-Übertragungsressource nicht verfügbar ist.

3. Verfahren zur Bestimmung nach Anspruch 1, wobei die Uplink-Übertragungsressource ein Uplink-Timing umfasst; und wobei die Verfügbarkeitsbestimmungsbedingung ferner umfasst:
einen Timer, welcher dem Uplink-Timing entspricht und sich in einem Betriebszustand befindet.

4. Verfahren zur Bestimmung nach Anspruch 1, wobei die Uplink-Übertragungsressource für eine Uplink-Übertragung in einem Ruhezustand oder einem inaktiven Zustand konfiguriert ist.

5. Verfahren zur Bestimmung nach Anspruch 1, wobei
der Referenzwert erhalten wird, indem die Downlink-Übertragung gemessen wird, bevor oder wenn eine Netzwerkvorrichtung die Uplink-Übertragungsressource konfiguriert oder eine Verbindung mit dem Benutzerendgerät freigibt; und
der Messwert erhalten wird, in dem die Downlink-Übertragung gemessen wird, nachdem die Netzwerkvorrichtung die Uplink-Übertragungsressource konfiguriert oder die Verbindung mit dem Benutzerendgerät freigibt.

6. Verfahren zur Bestimmung nach Anspruch 5, wobei ein festgelegtes Messobjekt zur Messung mindestens eines aus einer festgelegten Zelle, eines festgelegten Strahls, oder einem festgelegten Messsignal umfasst.

7. Verfahren zur Bestimmung nach Anspruch 5, wobei ein festgelegte Messgröße zur Messung eines oder einer Kombination aus einer Reference Signal Received Power, RSRP, einer Reference Signal Received Quality, RSRQ, einem Signal-zu-Interferenz-plus-Rausch-Verhältnis, SINR, und einem Pfadverlust umfasst.

8. Verfahren zur Bestimmung nach Anspruch 5, wobei der Messwert und/oder der Referenzwert durch Messen eines festgelegten Messsignals erhalten werden;
wobei das festgelegte Messsignal ein Messsignal ist, das gemäß Konfigurationsinformationen der Netzwerkvorrichtung bestimmt wird und zur Auswahl oder Neuauswahl von Zellen konfiguriert ist, oder für das Erhalten des Messwerts und/oder des Referenzwerts dediziert ist.

9. Verfahren zur Bestimmung nach Anspruch 8, wobei die Konfigurationsinformationen eines aus oder eine Kombination aus Frequenzanzeigeinformationen, einem Unterträgerabstand, einem Messzeitintervall, einer Referenzsignalkonfiguration, einem Strahlenmessschwellenwert, einer maximalen Anzahl an Strahlen, einer Strahlenkennung, und einer Signalkennung umfassen.

10. Verfahren zur Bestimmung nach Anspruch 8, wobei das festgelegte Messignal in der Uplink-Übertragungsressource konfiguriert ist; und wobei das Verfahren ferner umfasst:
Annehmen des festgelegten Messsignals, das in der Uplink-Übertragungsressource konfiguriert ist, um eine Auswahl oder Neuauswahl von Zellen durchzuführen, wenn bestimmt wird, dass die Uplink-Übertragungsressource verfügbar ist; und/oder
Stoppen der Annahme des festgelegten Messsignals, das in der Uplink-Übertragungsressource konfiguriert ist, um eine Messung durchzuführen, wenn bestimmt wird, dass die Uplink-Übertragungsressource nicht verfügbar ist.

11. Verfahren zur Bestimmung nach Anspruch 6, wobei ein Messergebnis der festgelegten Zelle umfasst:
ein durchschnittliches Messergebnis von Strahlen, deren Messwerte größer als ein Strahlenmessschwellenwert in der festgelegte Zelle sind; und/oder
ein maximales Messergebnis in Strahlen der festgelegten Zelle.

12. Verfahren zur Bestimmung nach Anspruch 6, wobei der festgelegte Strahl eines oder mehreres aus Folgendem umfasst:
einen Strahl mit einem größten Messwert in der festgelegten Zelle;
einen Strahl, welcher der Uplink-Übertragungsressource entspricht;
einen Strahl, der von der Netzwerkvorrichtung angegeben wird;
einen Strahl mit einem Messwert, der größer als ein oder gleich einem Strahlenmessschwellenwert ist; und
einen Strahl mit einem Messwert, der kleiner als ein oder gleich einem Strahlenmessschwellenwert ist.

13. Verfahren zur Bestimmung einer Uplink-Übertragungsressource, das von einer Netzwerkvorrichtung durchgeführt wird, umfassend:
Senden (701) einer Vielzahl von Sets von konfigurierten Uplink-Übertragungsressourcen an ein Benutzerendgerät;
wobei die Vielzahl von Sets von Uplink-Übertragungsressourcen für das Benutzerendgerät konfiguriert sind, um eine dedizierte Uplink-Übertragungsressourcen des Benutzerendgeräts basierend auf einer Verfügbarkeitsbestimmungsbedingung zu bestimmen;
**dadurch gekennzeichnet, dass** die Verfügbarkeitsbestimmungsbedingung umfasst:
einen Abweichungsbetrag eines Messwerts, der durch Messen einer Downlink-Übertragung erhalten wird, entsprechend der Uplink-Übertragungsressource in einem Ruhezustand oder einem inaktiven Zustand in Bezug auf einen Referenzwert, der durch Messen der Downlink-Übertragung in einem verbundene Zustand erhalten wird und kleiner als oder gleich einem festgelegten Schwellenwert ist; und
einen Übertragungstyp einer Uplink-Übertragung, der mit einem festgelegten Typ übereinstimmt, der für die Uplink-Übertragungsressource konfiguriert ist; wobei eine Kennung, die den Übertragungstyp darstellt, mindestens eines aus Folgendem oder eine Kombination aus Folgendem umfasst: eine Trägerkennung, eine Trägertypkennung, eine Datenflusskennung, eine Sitzungskennung, eine Logikkanalkennung, eine Zellgruppenkennung, die einem Dienst entspricht, und eine Uplink-Übertragungsressourcenkennung.

14. Kommunikationsvorrichtung, die aufweist:
einen Transceiver;
einen Speicher;
einen Prozessor, der mit dem Transceiver bzw. dem Speicher verbunden ist und dazu ausgebildet ist, eine drahtlose Signalübertragung und einen drahtlosen Signalempfang des Transceivers durch Ausführung von computerausführbaren Anweisungen auf dem Speicher auszuführen, und der in der Lage ist, das Verfahren nach einem der Ansprüche 1 bis 12 oder 13 zu implementieren.

15. Computerspeichermedium, auf dem computerausführbare Anweisungen gespeichert sind, die bei Ausführung durch einen Prozessor bewirken, dass das Verfahren nach einem der Ansprüche 1 bis 12 oder 13 implementiert wird.

## Revendications

1. Procédé de détermination d'une ressource de transmission de liaison montante, mis en œuvre par un équipement d'utilisateur, comprenant l'étape consistant à :
déterminer (101) une ressource de transmission de liaison montante dédiée de l'équipement d'utilisateur à partir d'une pluralité d'ensembles de ressources de transmission de liaison montante sur la base d'une condition de détermination de disponibilité ;
**caractérisé en ce que** la condition de détermination de disponibilité comprend :
une quantité de variation d'une valeur mesurée obtenue par une mesure d'une transmission de liaison descendante correspondant à la ressource de transmission de liaison montante dans un état de repos ou dans un état inactif par rapport à une valeur de référence obtenue par une mesure de la transmission de liaison descendante dans un état connecté qui est inférieure ou égale à un seuil défini ; et
un type de transmission d'une transmission de liaison montante correspondant à un type défini configuré pour la ressource de transmission de liaison montante ; dans lequel un identifiant représentant le type de transmission comprend au moins l'un ou une combinaison : d'un identifiant de porteuse, d'un identifiant de type de porteuse, d'un identifiant de flux de données, d'un identifiant de session, d'un identifiant de canal logique, d'un identifiant de groupe de cellules correspondant à un service, et d'un type de ressource de transmission de liaison montante.

2. Procédé de détermination selon la revendication 1, comprenant en outre l'étape consistant à :
libérer ou suspendre la ressource de transmission de liaison montante dans un cas dans lequel la ressource de transmission de liaison montante n'est pas disponible.

3. Procédé de détermination selon la revendication 1, dans lequel la ressource de transmission de liaison montante comprend une temporisation de liaison montante ; et la condition de détermination de disponibilité comprend en outre :
un temporisateur correspondant à la temporisation de liaison montante qui est dans un état en fonctionnement.

4. Procédé de détermination selon la revendication 1, dans lequel la ressource de transmission de liaison montante est configurée pour une transmission de liaison montante dans un état de repos ou dans un état inactif.

5. Procédé de détermination selon la revendication 1, dans lequel
la valeur de référence est obtenue par une mesure de la transmission de liaison descendante avant la configuration, par un dispositif de réseau, de la ressource de transmission de liaison descendante ou la libération, par ce dernier, d'une connexion avec l'équipement d'utilisateur, ou lors de cette dernière ; et
la valeur mesurée est obtenue par une mesure de la transmission de liaison descendante après la configuration, par le dispositif de réseau, de la ressource de transmission de liaison montante ou la libération, par ce dernier, de la connexion avec l'équipement d'utilisateur.

6. Procédé de détermination selon la revendication 5, dans lequel
un objet de mesure défini à des fins de mesure comprend au moins l'un d'une cellule définie, d'un faisceau défini, ou d'un signal de mesure défini.

7. Procédé de détermination selon la revendication 5, dans lequel un élément de mesure défini à des fins de mesure comprend l'un, ou une combinaison de certains, d'une puissance reçue de signal de référence, dite RSRP, d'une qualité reçue de signal de référence, dite RSRQ, d'un rapport signal utile/signal brouilleur et sur bruit, dit SINR, et d'une perte de propagation.

8. Procédé de détermination selon la revendication 5, dans lequel la valeur mesurée et/ou la valeur de référence sont obtenues par une mesure d'un signal de mesure défini ;
dans lequel le signal de mesure défini est un signal de mesure déterminé conformément à des informations de configuration du dispositif de réseau et configuré pour une sélection ou une resélection de cellule, ou dédié pour obtenir la valeur mesurée et/ou la valeur de référence.

9. Procédé de détermination selon la revendication 8, dans lequel
les informations de configuration comprennent l'un ou une combinaison de certains d'informations d'indication de fréquence, d'un intervalle entre sous-porteuses, d'un intervalle de temps de mesure, d'une configuration de signal de référence, d'un seuil de mesure de faisceau, d'un nombre maximal de faisceaux, d'un identifiant de faisceau, et d'un identifiant de signal.

10. Procédé de détermination selon la revendication 8, dans lequel le signal de mesure défini est configuré dans la ressource de transmission de liaison montante ; et le procédé comprend en outre les étapes consistant à :
adopter le signal de mesure défini configuré dans la ressource de transmission de liaison montante pour mettre en œuvre une sélection ou une resélection de cellule dans un cas dans lequel il est déterminé que la ressource de transmission de liaison montante est disponible ; et/ou
interrompre l'adoption du signal de mesure défini configuré dans la ressource de transmission de liaison montante pour mettre en œuvre une mesure dans un cas dans lequel il est déterminé que la ressource de transmission de liaison montante n'est pas disponible.

11. Procédé de détermination selon la revendication 6, dans lequel un résultat de mesure de la cellule définie comprend :
un résultat de mesure moyen de faisceaux dont les valeurs mesurées sont supérieures à un seuil de mesure de faisceau dans la cellule définie ; et/ou
un résultat de mesure maximal des faisceaux de la cellule définie.

12. Procédé de détermination selon la revendication 6, dans lequel le faisceau défini comprend l'un quelconque ou plusieurs faisceaux parmi :
un faisceau ayant une valeur mesurée la plus grande dans la cellule définie ;
un faisceau correspondant à la ressource de transmission de liaison montante ;
un faisceau indiqué par le dispositif de réseau ;
un faisceau ayant une valeur mesurée supérieure ou égale à un seuil de mesure de faisceau ; et
un faisceau ayant une valeur mesurée inférieure ou égale à un seuil de mesure de faisceau.

13. Procédé de détermination d'une ressource de transmission de liaison montante, mis en œuvre par un dispositif de réseau, comprenant l'étape consistant à^{:}
envoyer (701) une pluralité d'ensembles de ressources de transmission de liaison montante configurés à un équipement d'utilisateur ;
dans lequel les ensembles de la pluralité d'ensembles de ressources de transmission de liaison montante sont configurés pour que l'équipement d'utilisateur détermine une ressource de transmission de liaison montante dédiée de l'équipement d'utilisateur sur la base d'une condition de détermination de disponibilité ;
**caractérisé en ce que** la condition de détermination de disponibilité comprend :
une quantité de variation d'une valeur mesurée obtenue par une mesure d'une transmission de liaison descendante correspondant à la ressource de transmission de liaison montante dans un état de repos ou dans un état inactif par rapport à une valeur de référence obtenue par une mesure de la transmission de liaison descendante dans un état connecté qui est inférieure ou égale à un seuil défini ; et
un type de transmission d'une transmission de liaison montante correspondant à un type défini configuré pour la ressource de transmission de liaison montante ; dans lequel un identifiant représentant le type de transmission comprend au moins l'un ou une combinaison : d'un identifiant de porteuse, d'un identifiant de type de porteuse, d'un identifiant de flux de données, d'un identifiant de session, d'un identifiant de canal logique, d'un identifiant de groupe de cellules correspondant à un service, et d'un type de ressource de transmission de liaison montante.

14. Dispositif de communication, comprenant :
un émetteur-récepteur ;
une mémoire ;
un processeur connecté respectivement à l'émetteur-récepteur et à la mémoire, et configuré pour commander une transmission et une réception de signal sans fil de l'émetteur-récepteur par une exécution d'instructions exécutables par ordinateur maintenues dans la mémoire, et apte à mettre en œuvre le procédé selon l'une quelconque des revendications 1 à 12 ou 13.

15. Support d'informations d'ordinateur maintenant en son sein des instructions exécutables par ordinateur qui, lorsqu'elles sont exécutées par un processeur, provoquent la mise en œuvre du procédé selon l'une quelconque des revendications 1 à 12 ou 13.
